# EUROPEAN PATENT APPLICATION

(11) **EP 4 529 147 A1**
(43) Date of publication of application: **26.03.2025**
(21) Application number: 23870560.2
(22) Date of filing: 21.09.2023
(51) Int. Cl.: H04M 1/7243

(54) **MESSAGE PROCESSING METHOD**

(30) Priority: 28.09.2022 CN 202211189317; 16.02.2023 CN 202310144178
(71) Applicant: Huawei Technologies Co., Ltd., Shenzhen, Guangdong 518129 (CN)
(72) Inventor: LI, Cheng, Shenzhen, Guangdong 518129 (CN); LI, Shiming, Shenzhen, Guangdong 518129 (CN)
(74) Representative: Maiwald GmbH
(86) International application number: PCT/CN2023/120266
(87) International publication number: WO 2024/067328

(57) **Abstract**

A message processing method is applied to a first electronic device. The first electronic device is located in a distributed network. The distributed network further includes at least one electronic device other than the first electronic device. The message processing method includes: obtaining a first message; determining a message delivery policy for the first message based on information about a message type of the first message, information about an electronic device included in the distributed network, and information about a current scenario, where the message delivery policy includes information about a target electronic device; and sending the first message or a converted first message to the target electronic device. Therefore, according to the message processing method, the first message can be delivered to an electronic device that is in the distributed network and that is most suitable for processing the first message in the current scenario, so that timeliness of message processing is improved and user experience is improved.

## Description

This application claims priorities to Chinese Patent Application No. 202211189317.5, filed with the China National Intellectual Property Administration on September 28, 2022 and entitled "OPTIMAL MESSAGE PUSH METHOD BASED ON DISTRIBUTED SCENARIO", and to Chinese Patent Application No. 202310144178.2, filed with the China National Intellectual Property Administration on February 16, 2023 and entitled "MESSAGE PROCESSING METHOD", both of which are incorporated herein by reference in their entireties.

### TECHNICAL FIELD

This application pertains to the field of communication technologies, and in particular, relates to a message processing method.

### BACKGROUND

With development of society and improvement of people's living standards, more devices and more types of devices are available in the market, and message interaction between users becomes more convenient. In addition, a person or a family has an increasing quantity of devices and increasing types of devices, for example, smart terminal devices such as a mobile phone, a tablet, a watch, a band, smart glasses, a headset, a smart screen, and a vehicle-mounted terminal. To give full play to advantages of different devices, a user usually connects these devices through one or more transmission media to form a distributed network. In this network, because the mobile phone has advantages of direct access to a mobile network and a strong hardware capability, the mobile phone usually becomes a core device in the distributed network. Another device directly or indirectly exchanges information with the mobile phone, so that information can be shared between different devices, bringing convenience to the user.

To enrich people's life, in addition to an original message type of text, other message types such as voice, video, file, and emoticon also emerge. After these messages are transmitted to the mobile phone of the user through the mobile network, the mobile phone indiscriminately distributes the messages to other devices in the distributed network through the distributed network. As a result, the messages flood in the distributed network.

### SUMMARY

In view of this, embodiments of this application provide a message processing method, so that a message can be delivered to an electronic device that is in a distributed network in which an electronic device is located and that is most suitable for processing the message in a current scenario, so that timeliness of message processing is improved and user experience is improved.

A first aspect of embodiments of this application provides a message processing method, applied to a first electronic device. The first electronic device is located in a distributed network, and the distributed network further includes at least one electronic device other than the first electronic device. The method includes: obtaining a first message; determining a message delivery policy for the first message based on information about a message type of the first message, information about an electronic device included in the distributed network, and information about a current scenario, where the message delivery policy includes information about a target electronic device; and sending the first message or a converted first message to the target electronic device.

According to the first aspect, in a first possible implementation of the first aspect, the information about the electronic device included in the distributed network includes identification information of a currently online electronic device in the distributed network, and information about a message type supported by the currently online electronic device in the distributed network.

According to the first aspect and any one of the foregoing possible implementations of the first aspect, in a third possible implementation of the first aspect, the information about the current scenario is determined based on multi-device data from the electronic device in the distributed network, and the multi-device data includes one or more of distributed network device data, relationship data between electronic devices, user setting data, user status data, and device sensor data.

According to the first aspect and any one of the foregoing possible implementations of the first aspect, in a fourth possible implementation of the first aspect, the message delivery policy further includes a message type conversion policy.

According to the third possible implementation of the first aspect, in a fifth possible implementation of the first aspect, the method further includes: converting the first message of a first type into a first message of a second type according to the message type conversion policy. The sending a converted first message to the target electronic device specifically includes: sending the first message of the second type to the target electronic device, where the target electronic device supports the first message of the second type, but does not support the first message of the first type.

According to the fourth possible implementation of the first aspect, in a sixth possible implementation of the first aspect, the method further includes: sending a feature identifier corresponding to the first message to the target electronic device, where the feature identifier indicates that the first message received by the target electronic device is a message on which type conversion is performed.

According to the first aspect and any one of the foregoing possible implementations of the first aspect, in a seventh possible implementation of the first aspect, the sending the first message or a converted first message to the target electronic device specifically includes: sending the first message or the converted first message to the target electronic device, and skipping sending the first message or the converted first message to an electronic device other than the target electronic device in the distributed network.

A second aspect of embodiments of this application provides an electronic device. The electronic device includes a processor and a memory, the memory stores instructions, and when the instructions are run in the processor, the electronic device is enabled to perform the message processing method according to the first aspect or any one of the possible implementations of the first aspect.

A third aspect of embodiments of this application provides a computer program product, where the computer program product includes instructions, and when the instructions are executed, an electronic device on which the computer program product is installed is enabled to perform the message processing method according to the first aspect or any one of the possible implementations of the first aspect.

A fourth aspect of embodiments of this application provides a computer-readable storage medium, where the computer-readable storage medium includes instructions, and when the instructions are executed, an electronic device on which the computer-readable storage medium is installed is enabled to perform the message processing method according to the first aspect or any one of the possible implementations of the first aspect.

### BRIEF DESCRIPTION OF DRAWINGS

FIG. 1 is a diagram of a distributed network according to an embodiment of this application;
FIG. 2 is a diagram of a distributed message push scenario according to an embodiment of this application;
FIG. 3 is a diagram of a system architecture for message processing according to an embodiment of this application;
FIG. 4 is a diagram of a message delivery policy module according to an embodiment of this application;
FIG. 5 is a diagram of a user scenario recognition module according to an embodiment of this application;
FIG. 6 is a diagram of a distributed network device information management module according to an embodiment of this application;
FIG. 7 is a diagram of a message conversion module according to an embodiment of this application;
FIG. 8 is a diagram of a distributed message push scenario 1 according to an embodiment of this application;
FIG. 9 is a flowchart of a distributed message push scenario 1 according to an embodiment of this application;
FIG. 10 is another diagram of a distributed message push scenario 1 according to an embodiment of this application;
FIG. 11 is a diagram of a distributed message push scenario 2 according to an embodiment of this application;
FIG. 12 is a flowchart of a distributed message push scenario 2 according to an embodiment of this application;
FIG. 13 is another diagram of a distributed message push scenario 2 according to an embodiment of this application;
FIG. 14 is a diagram of a distributed message push scenario 3 according to an embodiment of this application;
FIG. 15 is a flowchart of a distributed message push scenario 3 according to an embodiment of this application;
FIG. 16 is another diagram of a distributed message push scenario 3 according to an embodiment of this application;
FIG. 17 is a diagram of a distributed message push scenario 4 according to an embodiment of this application;
FIG. 18 is a flowchart of a distributed message push scenario 4 according to an embodiment of this application;
FIG. 19 is another diagram of a distributed message push scenario 4 according to an embodiment of this application;
FIG. 20 is another flowchart of a distributed message push scenario 4 according to an embodiment of this application;
FIG. 21 is still another diagram of a distributed message push scenario 4 according to an embodiment of this application;
FIG. 22 is a diagram of a structure of an electronic device according to an embodiment of this application; and
FIG. 23 is a block diagram of a software structure of an electronic device according to an embodiment of this application.

### DESCRIPTION OF EMBODIMENTS

In the following description, for illustration instead of limitation, specific details such as a particular system structure and a technology are provided to facilitate a thorough understanding of embodiments of this application. However, a person skilled in the field should know that this application may also be implemented in other embodiments without these specific details. In other cases, detailed descriptions of well-known systems, apparatuses, circuits, and methods are omitted, so that this application is described without being obscured by unnecessary details.

As described in the background, a plurality of devices may be connected through one or more transmission media to form a distributed network. The transmission medium may include one or more of communication media such as cellular communication (for example, a 4G or 5G network), optical communication (for example, an optical fiber), satellite communication (for example, a BeiDou communication satellite), and near field communication (for example, Bluetooth or Wi-Fi). In other words, the transmission medium may include one or more wired and/or wireless communication media. In the distributed network formed by connecting the plurality of devices through various transmission media may include a plurality of devices that perform point-to-point direct communication, for example, a plurality of devices that perform communication in a near field communication manner like Wi-Fi P2P, or may include a plurality of devices that perform indirect communication with assistance of another device, for example, a plurality of devices that implement data interworking via a cloud server. In this case, the plurality of devices usually have an association relationship, for example, the plurality of devices are logged in to a same account.

In some examples, a mobile phone may usually serve as a core device in the distributed network, and another device may directly or indirectly exchange information with the mobile phone. It should be understood that, in embodiments of this application, an example in which the mobile phone serves as the core device in the distributed network is used for description. However, this does not constitute a limitation. The core device of the distributed network may alternatively be another device.

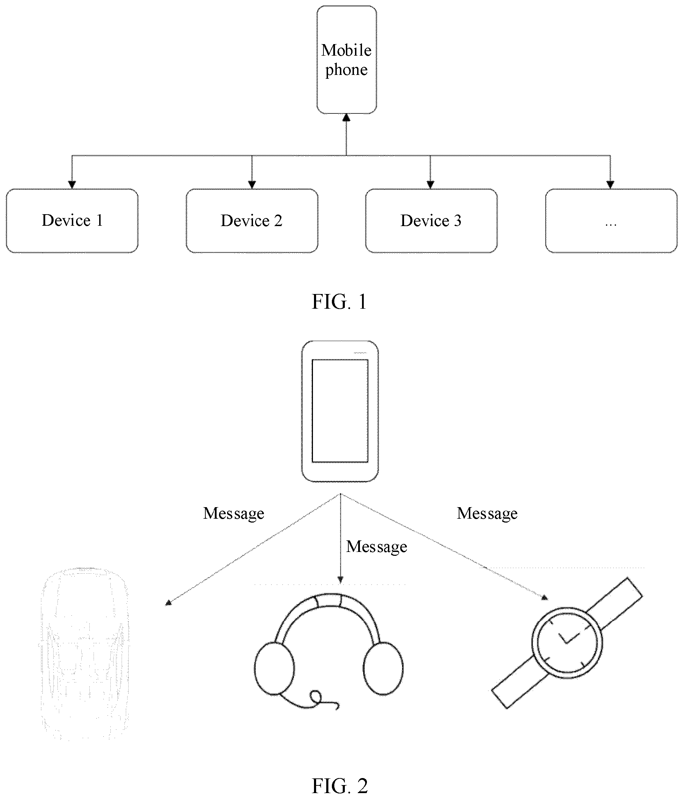

In a possible implementation, a message processing method of the distributed network may use an architecture shown in FIG. 1. Based on this architecture, the message processing method of the distributed network may include the following procedure.
(1) After receiving a message, the mobile phone searches for a device in the distributed network.
(2) The mobile phone pushes the message to each device, for example, a device 1, a device 2, and a device 3, through the distributed network.
(3) Each device that receives the message sends a message notification for a user to view.
(4) The user views and processes (for example, deletes) the message on a device (for example, a smart device 1).
(5) The device notifies the mobile phone or another device of a message processing behavior of the user through the distributed network.
(6) The mobile phone or the another device processes (for example, lets the message do not remind again or clears the message) the message corresponding to the mobile phone or the another device based on the notification.

Specifically, with reference to a scenario shown in FIG. 2, an example is used for description.

In response to receiving an SMS message, the mobile phone displays a message notification of "one new SMS message" in a notification center of the mobile phone. In addition, in response to receiving the SMS message, the mobile phone searches for another device in the distributed network in which the mobile phone is located, for example, finds a vehicle-mounted terminal, a headset, and a watch that are logged in to a same account as the mobile phone.

Further, the mobile phone pushes information indicating that the SMS message is received to the vehicle-mounted terminal, the headset, and the watch through a transmission medium between the mobile phone and the vehicle-mounted terminal, the headset, and the watch (for example, a cloud server or a near field communication manner like Bluetooth or Wi-Fi, where transmission media between the mobile phone and the vehicle-mounted terminal, between the mobile phone and the headset, and between the mobile phone and the watch may be the same or different). The vehicle-mounted terminal and the watch usually have a display. Therefore, a message notification of "one new SMS message" may be displayed in a notification center of the vehicle-mounted terminal and the watch. The headset usually does not have a display. Therefore, the headset does not respond to the information that is pushed by the mobile phone and that indicates that the SMS message is received.

Subsequently, it is assumed that the user processes the message notification via the vehicle-mounted terminal, for example, the user views the new SMS message, clears the message notification of the SMS message, or marks the SMS message as read. In this case, the vehicle-mounted terminal notifies another device in the distributed network of a behavior that the user processes the SMS message. In this example, a notification is sent to the headset, the watch, and the mobile phone. Therefore, in response to the received notification that is sent by the vehicle-mounted terminal and that indicates that the user processes the message notification on the vehicle-mounted terminal, the watch and the mobile phone clear the message notification of the SMS message in the notification center of the watch and the mobile phone. The headset may not respond to the notification.

It should be noted that the example is described by using an SMS message as an example, but this does not constitute a limitation. The message described in embodiments of this application may include various types of messages such as an SMS message, an incoming call, an application push message (for example, a news message pushed by a news application), an instant messaging application message (for example, a text, a picture, or a voice message sent by a WeChat friend), and a system message (for example, a message used to notify that a new version of an operating system is available for upgrade).

In the foregoing message processing method in the distributed network, an indiscriminate push manner is used. The indiscriminate push means that after receiving a message, a device in a distributed network pushes the message to all other devices that can be found by the device in the distributed network. All other devices in the distributed network receive the push of the message. This manner may have one or more of the following problems.
1. Message processing efficiency is low, safety risks exist, and/or privacy is leaked.

A message type is not considered by indiscriminate push. For example, a mobile phone receives a voice message of a friend in an instant messaging application via the instant messaging application installed on the mobile phone, and the mobile phone pushes the voice message to a band. However, the band may not have a voice playing function, and a user cannot learn specific content of the voice message via the band. Even if the user learns, via the band, that a voice message is received (for example, the band vibrates), the user still needs to use the mobile phone to view the voice message. As a result, message processing efficiency is low. For another example, in a driving process of a user, a mobile phone receives a text message of a friend in an instant messaging application via the instant messaging application installed on the mobile phone, and the mobile phone pushes the text message to a vehicle-mounted terminal. The user views the text message via the vehicle-mounted terminal, so that attention of the user is distracted, and this poses safety risks to driving.

A user scenario is not considered by indiscriminate push. For example, when a user is not driving alone and a mobile phone pushes a received message to a vehicle-mounted terminal, another passenger in a vehicle can also view the message, resulting in user privacy leakage.

2. Distributed network channel resources are occupied.

Because a message is pushed to all other devices in a distributed network indiscriminately, as a quantity of devices increases and a quantity of messages increases, occupation of network channel resources in the indiscriminate push manner becomes increasingly obvious, and this affects transmission of other data that needs to be transmitted in the distributed network.

3. Message processing results are not synchronized, and user experience is affected.

Devices in a distributed network may be unstable. For example, a watch having no cellular communication capability communicates, through Bluetooth and/or Wi-Fi, with a watch paired with the watch, and obtains a capability of accessing an external network. If a distance between the watch having no cellular communication capability and the watch paired with the watch exceeds a maximum distance supported by a near field communication manner like Bluetooth or Wi-Fi, the watch cannot communicate with the external network, and this is equivalent to that the watch exits the distributed network in which the watch is previously located. The watch can rejoin the distributed network in which the watch is previously located only when the watch returns to a distance coverage area in which near field communication can be performed with a mobile phone again. In this way, if a message pushed by the mobile phone is received when the watch is in the distributed network, but a user processes, for example, deletes a notification of the message, marks the message as read, or deletes the message, the message via the watch when the watch is not in the distributed network, a behavior of processing the message by the user on the watch cannot be notified to another device in the distributed network in which the watch is previously located. As a result, the another device in the distributed network still marks the message as unprocessed. For example, a notification center of the another device still pushes the message. When the user uses the another device, the user views the message repeatedly, so that user experience is affected.

In view of this, embodiments of this application provide a message processing method, so that a form of pushing a message can be preferably selected for different devices. A user scenario can be recognized based on a sum of data of all devices, and a message can be accurately pushed based on the recognized user scenario. In this way, a problem caused by indiscriminate push of messages in a distributed network is resolved.

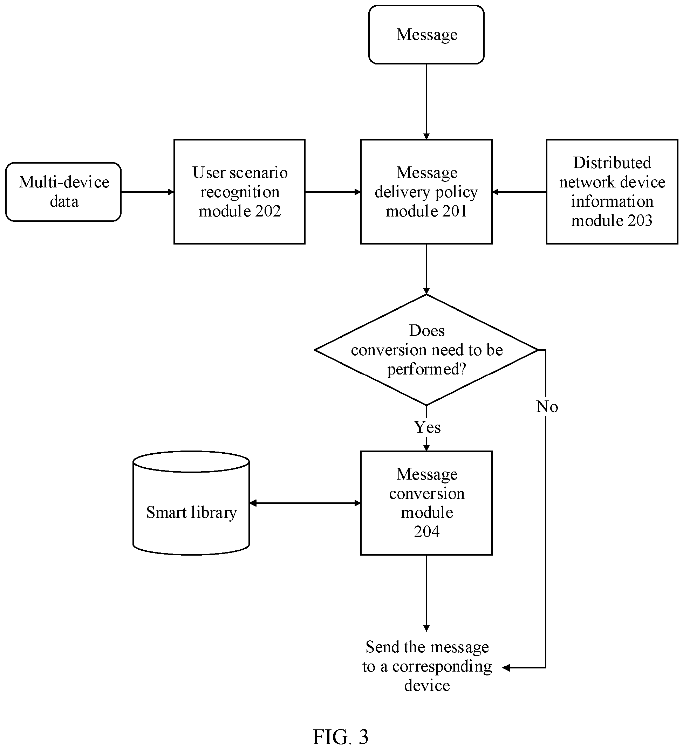

FIG. 3 shows an example of a diagram of a system architecture of message processing method according to an embodiment of this application. As shown in FIG. 3, the system architecture mainly adds a message delivery policy module 201 and a message conversion module 204 to a message processing procedure in a distributed network. Further, in some implementations, to better formulate a message delivery policy, the system architecture may further include a user scenario recognition module 202 and a distributed network device information module 203.

As shown in FIG. 3, when a device in the distributed network receives a message, the message delivery policy module 201 may determine a message delivery policy based on a user scenario determined by the user scenario recognition module 202 and device information in the current distributed network determined by the distributed network device information module 203, that is, determine a device to which the message is to be delivered. Then, whether the message needs to be converted may be determined based on the determined message delivery policy. If the message needs to be converted, the message conversion module 204 may convert the message into a target format based on a smart library and then send the message to the corresponding device. If the message does not need to be converted, the message is directly sent to the corresponding device.

The following specifically describes possible implementations of the modules with reference to examples.

### 1. Message delivery policy module 201

The message delivery policy module 201 may be configured to determine a policy for delivering a message between devices in a distributed network. For example, the policy may include: whether to deliver a message to a device in the distributed network, or to which device or devices in the distributed network a message received by a device in the distributed network needs to be delivered. "Deliver" may alternatively be described in another expression manner like "push" or "synchronize". Specifically, in embodiments of this application, delivery may refer to a process in which a device in a distributed network receives a message.

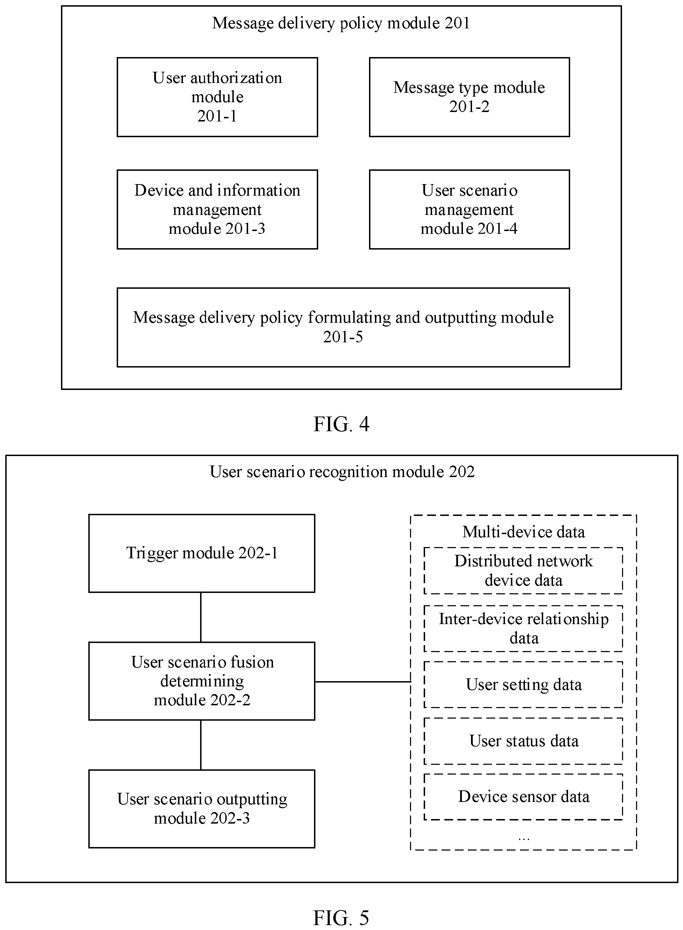

In a possible implementation, as shown in FIG. 4, the message delivery policy module 201 may include a user authorization module 201-1, a message type module 201-2, a device information management module 201-3, a user scenario management module 201-4, and a message delivery policy formulating and outputting module 201-5.

The user authorization module 201-1 may be configured to determine whether a user authorizes to enable an intelligent message delivery function. The user authorization module 201-1 may run in a terminal device of the user, for example, run in a mobile phone of the user.

To implement the message processing method (that is, the "intelligent message delivery" function in the foregoing example) provided in embodiments of this application, in some implementations, data analysis and pattern recognition need to be performed based on historical data of the user using the terminal device. Therefore, the user authorization module 201-1 may be configured to determine whether the user authorizes to enable the function and whether the historical data of the user is authorized to be used for data analysis and pattern recognition, so as to improve user experience of intelligent message delivery. If the user does not enable the function, a default message delivery policy may be used. For example, a message received by a device in a distributed network is pushed to all other devices in the distributed network indiscriminately. If the user enables the function, the message processing method provided in embodiments of this application may be used.

The message type module 201-2 may be configured to obtain a type of a message. The type of the message may be obtained by reading a type identifier corresponding to the message, or may be obtained by recognizing content of the message. In an implementation, each received message may correspond to a type identifier that indicates a type to which the message belongs. For example, the type identifier may be generated when a message transmit end device sends the message. Therefore, when receiving the message, a receive end device may obtain the type of the message based on the type identifier corresponding to the message. In another implementation, any one of a transmit end device, a server, or a receive end device may intelligently recognize content of a message, to obtain a type of the message.

The type of the message may include one or more classification manners. In one manner, based on a content form of a message, the message may be classified into types such as a text message, a voice message, an image message, an image-text message, and a hyperlink message. The text message includes, for example, an SMS message in a plain text form. The voice message includes, for example, a voice message sent by a WeChat friend. The image message includes, for example, an image message sent by a WeChat friend. The image-text message includes, for example, an SMS message in a multimedia message form. The hyperlink message includes, for example, a page shared by a WeChat friend from another application. In another manner, based on a source of a message, the message may be classified into types such as a system message or an application message. The system message includes, for example, a system update message that is pushed by an operating system developer of a device and that indicates that an operating system has a new version and can be upgraded. The application message includes a message pushed by an application installed on a device, for example, news pushed by Toutiao, a friend message pushed by WeChat, and a new SMS message pushed by Messages. It may be understood that a message may alternatively be classified based on a plurality of classification manners. For example, based on a content form of a message and a source of the message, the message is classified into a text message from a system, an image-text message from a system, a text message from an application, and a voice message from an application.

The device and information management module 201-3 may be configured to manage device information obtained by the distributed network device information module 203 and a message type supported by each device.

The device information may include, for example, one or more of information such as a device identifier, a device model, a device type, a device hardware parameter, and a device software parameter, and a current status of a device. The device identifier may be, for example, a media access control (media access control, MAC) address, an Internet protocol (Internet protocol, IP) address, or a universally unique identifier (universally unique identifier, UUID) of the device, and may be used to uniquely determine the device. To be specific, a device identifier of each device is unique, and device identifiers of any two devices are different. The device model may be, for example, business identifier names of devices of different models designed by device manufacturers such as "Huawei MATE50" and "Huawei P40". The device type may be, for example, a mobile phone, a tablet, a PC (personal computer), a headset, a watch, a vehicle-mounted terminal, or a smart screen. The device hardware parameter may be, for example, whether the device has a hardware module or a model of a hardware module of the device, for example, whether the device has a speaker, whether the device has a screen, whether the device has a cellular communication module, or a specific model of the foregoing hardware module. The device software parameter may be, for example, a type and a version of an operating system of the device, or a type and a version of message parsing software in the device. The current status of the device may be, for example, whether the device is currently used by the user, for example, whether a screen of a mobile phone or a tablet is on, whether a user input is received, or whether a headset or a watch is worn by the user. If the screen of the mobile phone or the tablet is on, and the user input is received within a period of time, it is considered that the mobile phone or the tablet are in a state of being used by the user. If the headset and the watch are worn by the user, it is considered that the headset and the watch are in a state of being used by the user.

The message type supported by the device may include, for example, a text message, a voice message, an image message, an image-text message, and a hyperlink message. Each device may correspondingly have a message type supported by the device. A device may support a plurality of types of messages or only one type of messages. "Support" may be understood as whether a device can effectively process a message of a specific type and effectively present a message of a specific type to a user. The message type supported by the device may be associated with software and hardware parameters of the device. For example, a device that does not have a speaker may not support a voice message, and a device that does not have a screen may not support an image message. For another example, if hardware of a device includes a screen, but software installed in the device does not support parsing and presentation of an image message, the device still cannot support the image message due to software parameters even if the hardware has a screen.

The message type supported by the device may be directly obtained by the device and information management module 201-3 from the distributed network device information module 203, or may be obtained by the device and information management module 201-3 by querying based on the device identifier, device model, or device type obtained from the distributed network device information module 203, or may be inferred by the device and information management module 201-3 based on the device information obtained from the distributed network device information module 203, for example, inferred based on the device hardware parameters and device software parameters. The "query" may be querying a local database or a server database, or may be querying through internet search. The foregoing "inference" may be obtained through matching according to a preset rule. For example, if the preset rule is that a voice message is supported if a device has a speaker, the device and information management module 201-3 may infer, based on presence of a speaker in the device, that the device supports the voice message.

The user scenario management module 201-4 may be configured to obtain user scenario information from the user scenario recognition module 202. The user scenario information may include, for example, one or more pieces of information such as an application scenario (or mode) in which the user is currently located, a currently ongoing activity of the user, or an environment in which the user is currently located. The application scenario in which the user is currently located may be, for example, a driving scenario, a home scenario, an office scenario, an audio and video entertainment scenario, a sports scenario, or a sleep scenario. The currently ongoing activity of the user may be, for example, running, cycling, driving, taking a vehicle, falling asleep, or already asleep. The information about the environment in which the user is currently located may be, for example, a quiet environment, a noisy environment, an alone environment, or a not alone environment.

In some possible implementations, the currently ongoing activity of the user and/or the environment in which the user is currently located may be used as a sub-parameter of the application scenario in which the user is currently located. For example, examples of some possible pieces of user scenario information may be: "driving scenario: driving, alone", "driving scenario: driving, not alone", "driving scenario: taking a vehicle, not alone", "sports scenario: running, noisy", and "sleep scenario: falling asleep, quiet".

The message delivery policy formulating and outputting module 201-5 may be configured to formulate a message delivery policy through convergence based on data of the device and information management module 201-3 and data of the user scenario management module 201-4, and transfer the formulated policy to a downstream module. A process of formulating a message delivery policy may be implemented according to a rule preset by a developer or a user, or may be intelligently implemented through pattern recognition and learning of a use habit of a user based on historical data of using a device by the user. Certainly, the foregoing two manners may alternatively be jointly applied. In other words, an initial message delivery policy is first obtained according to a rule preset by a developer or a user. Then, pattern recognition is performed based on historical data of using a device by the user, a use habit of the user is learned, and the initial message delivery policy is intelligently and pertinently adjusted, to obtain a final message delivery policy.

### 2. User scenario recognition module 202

The user scenario recognition module 202 may be configured to determine a user scenario. In a possible implementation, as shown in FIG. 5, the user scenario recognition module 202 may include a trigger module 202-1, a user scenario fusion determining module 202-2, and a user scenario outputting module 202-3.

The trigger module 202-1 may be configured to: determine whether a trigger condition is met, and trigger, when the trigger condition is met, the user scenario recognition module 202 to determine the user scenario. More specifically, the trigger module 202-1 may trigger the user scenario fusion determining module 202-2 to determine the user scenario. It may be understood that, in one aspect, the user scenario may change at any time, and if a change of the user scenario is not recognized in time, user experience is affected. In another aspect, the user scenario is also continuous. After entering a new user scenario, a user stays for a period of time, and determining the user scenario too frequently causes high power consumption and occupies network resources. Therefore, a specific trigger condition may be configured by configuring the trigger module 202-1. When the trigger condition is met, the user scenario recognition module 202 is triggered to confirm the user scenario once, so that a change of the user scenario can be recognized in time, and power consumption and network resource occupation can be reduced as much as possible.

In an implementation, the trigger condition may include, for example, one or more trigger conditions such as that a motion state determined based on sensor data changes, a Wi-Fi network that can be accessed by the device changes (for example, leaving or entering a coverage area of a Wi-Fi network), a device screen is woken up, a vehicle door is opened, or a headset is worn by the user.

It may be understood that the trigger module 202-1 may be an optional module. In other words, the user scenario recognition module 202 may not include a trigger module 202-1. In this case, scenario recognition may be performed at a preset time interval. For example, a user scenario is recognized every one minute.

The user scenario fusion determining module 202-2 may be configured to determine the user scenario based on multi-device data. The multi-device data may include, for example, one or more pieces of data such as distributed network device data, inter-device relationship data, user setting data, a user status, and device sensor data. It may be understood that the multi-device data may refer to data from a plurality of devices in a distributed network.

The distributed network device data may be, for example, which devices are currently online in the distributed network, or a current online/offline state of a device in the distributed network. The online/offline state may be related to whether the device is connected to a network or whether the device is a powered-on state. For example, in an example in which a distributed network is formed by using a mobile phone as a center, the distributed network includes the mobile phone, a watch, and a headset. The mobile phone is in a state in which the mobile phone can be connected to the internet and is powered on. The watch is in a state in which the watch cannot be connected to the internet and is powered on (for example, the watch is a watch that does not have a cellular communication function or needs to be connected to the internet based on a mobile phone communication function, and cannot be connected to the internet when the watch is far away from the mobile phone). The headset automatically powers off due to power exhaustion. In this case, the status of the device in the distributed network may be that the mobile phone is in an online state, and the watch and the headset are in an offline state.

The inter-device relationship data may include, for example, distance and orientation data between devices. In an implementation, the distance and orientation data between devices may be obtained based on a positioning module in the device. The positioning module may include, for example, one or more of a GPS (global positioning service) positioning module, a UWB (ultra-wide band) positioning module, a short-range communication positioning module (for example, a module that performs positioning based on a short-range communication signal such as a Wi-Fi signal or a Bluetooth signal, for example, determining a distance between devices based on signal strength), and an ultrasonic ranging and/or positioning module. In another implementation, the distance and orientation data between devices may alternatively be obtained based on data collected by a third device, for example, obtained through recognition based on image or video data collected by a camera. For example, the distance and orientation data between devices may be, for example, that a distance between a mobile phone and a vehicle-mounted terminal is within 0.5 meters, or that a mobile phone is located on a side of a direction that a smart screen faces. In addition, the inter-device relationship data may further include connection status data between devices, or data about whether devices can be connected. For example, a Bluetooth connection is established between the mobile phone and the headset, a Wi-Fi direct connection is established between the mobile phone and the tablet, or the mobile phone and the watch are in a state in which no connection is established but a connection can be established.

The user setting data may include, for example, a user scenario (or a user mode) set by the user, for example, a driving scenario, a home scenario, an office scenario, an audio and video entertainment scenario, a sports scenario, a sleep scenario, a do-not-disturb mode, a focus mode, or an entertainment mode. In an implementation, the user may manually adjust the user scenario. For example, if a user needs to drive home after work, the user may manually set the user scenario from the office scenario to the driving scenario. In another implementation, the user may preset a condition for automatically entering a scenario, so that the device can enter the scenario when determining that the condition is met.

The user status data may include, for example, moving, still, sitting, standing, lying, walking, running, jumping, being alone, and not being alone. The user status data may be obtained based on data collected by a sensor in the device. For example, the user status data may be obtained based on data collected by a sensor in a wearable device (like a watch or a band) worn by the user or a device (like a mobile phone) carried by the user. Alternatively, the user status data may be obtained based on data collected by a sensor in another device. For example, whether a user is sitting in a vehicle is obtained based on an in-vehicle seat sensor. Alternatively, the user status data may be obtained based on positioning data. For example, whether the user is in a moving state or a still state is obtained based on GPS positioning data. In some other implementations, the user status data may alternatively be set by the user. For example, the user manually sets a status of the user to shopping, hiking, sleeping, or the like.

The device sensor data may refer to data collected by a sensor in the device. The device may obtain user status data based on the data collected by the sensor in the device, and then share the user status data with another device in the distributed network. Alternatively, the device may send data collected by the sensor in the device to a central device in the distributed network, and the central device obtains the user status data sensor based on data of a plurality of devices in the distributed network, and then shares the user status data in the distributed network.

It may be understood that the user scenario fusion determining module 202-2 may determine the user scenario based on the foregoing one or more types of multi-device data. In an example of determining the user scenario based on one type of multi-device data, the user scenario fusion determining module 202-2 may determine, based on device sensor data or user status data, that the user is currently running, and determine that the current user scenario is a "sports scenario". For another example, the user scenario fusion determining module 202-2 may determine, based on user setting data in which the user sets, via the mobile phone, a current scenario to the "do-not-disturb mode", that the current user scenario is the "do-not-disturb mode". In an example of determining the user scenario based on a plurality of types of multi-device data, the user scenario fusion determining module 202-2 may comprehensively determine, based on user setting data in which the user sets, via the mobile phone, a current scenario to the "driving scenario", sensor data collected by a watch worn by the user, data about a distance between the watch and the vehicle-mounted terminal, GPS positioning data of the watch, and GPS positioning data of the vehicle-mounted terminal, that the user may be currently in a scenario in which the user temporarily leaves the vehicle.

The user scenario outputting module 202-3 is configured to transmit the user scenario determined by the user scenario fusion determining module 202-2 to the downstream module.

### 3. Distributed network device information module 203

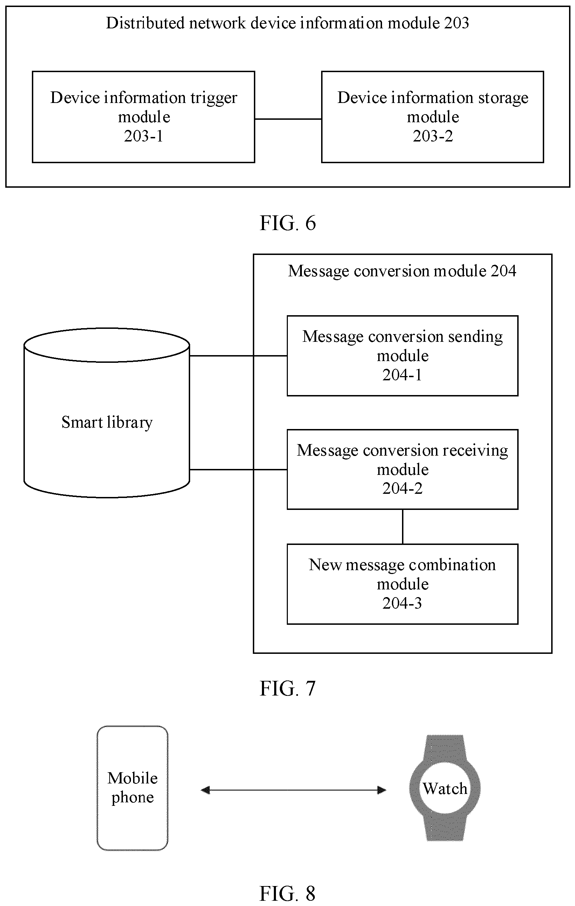

The distributed network device information module 203 may be configured to obtain and manage device information in a distributed network. In a possible implementation, as shown in FIG. 6, the distributed network device information module 203 may include a device information trigger module 203-1 and a device information storage module 203-2.

The device information trigger module 203-1 may be configured to refresh the device information based on a status of a device in the distributed network. For example, in response to a change of the status of the device in the distributed network, the device information trigger module 203-1 triggers device information refreshing. For example, the status of the device in the distributed network may include online/offline (or getting online/offline), and network connection quality. A device in an online state may communicate with another device in the distributed network, and a device in an offline state cannot communicate with another device in the distributed network. When the status of the device in the distributed network changes from online to offline or from offline to online, refreshing of the status of the device may be triggered. The network connection quality may be described by using a parameter like a signal strength parameter. When network connection quality of a device in the distributed network changes, for example, changes from a good signal to a poor signal or from a poor signal to a good signal, refreshing of the status of the device may be triggered.

It may be understood that the distributed network may include a plurality of types of devices, and different devices have different functions. Some devices may be located at a user's home, for example, a smart screen. Some devices may be carried by the user, for example, a mobile phone or a watch. User activities change online/offline states and network connection quality of the devices in the distributed network. To ensure that the message processing method provided in embodiments of this application can efficiently implement on-demand and precise message delivery, it is critical to accurately obtain the device information in the distributed network in real time. Therefore, the device information trigger module 203-1 may trigger device information refreshing once each time it is detected that the status of the device in the distributed network changes, for example, trigger an operation of obtaining currently online devices included in the distributed network once, and further trigger an operation of obtaining current network connection quality of these devices once. In this way, the device information trigger module 203-1 can ensure that accurate device information of devices in the current distributed network is obtained in time, to provide the accurate device information in the current distributed network for the message delivery policy module 201. Further, the message delivery policy module 201 can formulate an appropriate message delivery policy.

The following problem may occur in some scenarios: In a period from a moment when a device leaves a distributed network to a moment when the device rejoins the distributed network, or when quality of communication connection between the device and another device in the distributed network is poor, if a user processes a message on the device, a behavior that the user processes the message on the device cannot be synchronized to the another device in the distributed network in time. As a result, the message is still marked as unprocessed on the another device in the distributed network. After the message processing method provided in embodiments of this application is applied, the device information trigger module 203-1 may trigger device information refreshing when the device joins the original distributed network again, or when the quality of the network connection between the device and the another device in the distributed network becomes better, to learn in time that the status of the device changes from the offline state to the online state, or learn in time that the network connection quality of the device changes from poor to good. In this way, the behavior that the user processes the message on the device is synchronized in time in the distributed network, and the message on the another device in the distributed network is marked as processed.

The device information storage module 203-2 may be configured to store the status of the device in the distributed network and a supported message type. The status of the device may include, for example, an online state, an offline state, good network connection quality, and poor network connection quality. The message type may include, for example, a text message, a voice message, an image message, an image-text message, and a hyperlink message.

### 4. Message conversion module 204

The message conversion module 204 may be configured to convert a message that needs to be converted into a message of a target type. For example, a voice message is converted into a text message, and an image message is converted into a text or a voice message used to describe image content.

In a possible implementation, as shown in FIG. 7, the message conversion module 204 may include a message conversion sending module 204-1, a message conversion receiving module 204-2, and a new message combination module 204-3.

The message conversion sending module 204-1 may be configured to send a message conversion requirement and message content to a smart library. The message conversion requirement may include, for example, a type to which a message is converted, or an indication of converting a message into a message of a target type. In this way, the smart library processes the message content according to the message conversion requirement, to obtain the converted message of the target type.

The smart library may be configured to provide a technical capability of implementing message conversion. For example, the smart library may include one or more models, for example, a voice-to-text (text-to-speech) model that may be used to convert a voice message into a text message, and an optical character recognition (optical character recognition, OCR) model that may be used to recognize a text in an image. The smart library may be located in a device in a distributed network, for example, located in a device with a strong computing capability in the distributed network, or may be located in a server. This is not limited in this application. Optionally, if both the device and the server in the distributed network include a smart library, the smart library may be selected or used in combination based on a specific situation.

For example, selection is performed based on network quality. If the distributed network currently cannot connect to the server or quality of a network connection between the distributed network and the server is poor, the smart library in the device in the distributed network may be used for message conversion. Otherwise, the smart library in the server may be used for message conversion. For another example, selection is performed based on a difficulty of message conversion. If message conversion can be completed by the smart library in the device in the distributed network, the smart library in the device in the distributed network is used to perform message conversion. Otherwise, the smart library in the server may be used to perform message conversion. For another example, the smart library in the device in the distributed network may be first used to perform preliminary processing on a message, and the smart library in the server may be used to perform further processing on a message obtained through the preliminary processing, to obtain a message of a target type.

The message conversion receiving module 204-2 may be configured to receive and check the message converted by the smart library. For example, the checking may be checking whether a converted message corresponds to a message before conversion.

The new message combination module 204-3 may be configured to add some feature annotations to the converted message to combine the converted message into a new message. In some implementations, the feature annotation may be added before the converted message. The feature annotation may be used to notify a user of an original type of the converted message, or used to notify the user that the message is obtained through message type conversion. For example, the feature annotation may be "[voice-to-text]", "[image-to-text]", "[converted]", or "[intelligent conversion]". In this way, when seeing the feature identifier, the user can know that the message is not a message of an original type but a converted message, and there may be a probability of a recognition error (for example, a voice is converted into a text, and the voice is recognized as an incorrect text). Therefore, for an important message, the user may view the original message based on the feature annotation, so that an adverse impact of incorrect conversion of the important message on the user is avoided as much as possible.

Based on the foregoing detailed descriptions of the modules in the system architecture of the message processing method provided in embodiments of this application, the following describes, with reference to specific examples, specific implementations of the message processing system architecture and the message processing method provided in embodiments of this application in various application scenarios.

### Scenario 1: Distributed network including a mobile phone and a watch

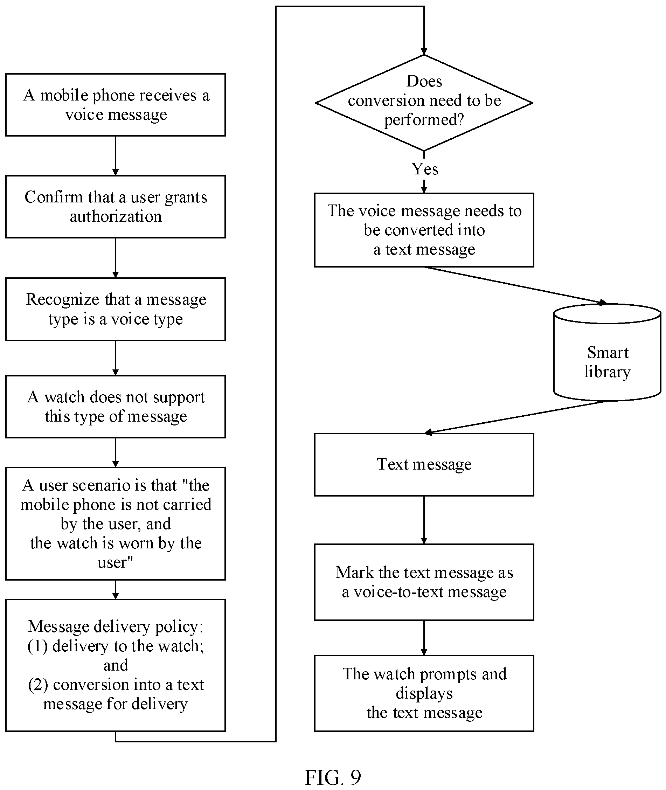

As shown in FIG. 8, the mobile phone and the watch may communicate with each other through a Bluetooth connection between the mobile phone and the watch, and the mobile phone and the watch form the distributed network. FIG. 9 shows an example of steps performed, after the mobile phone receives a voice message in this scenario, by the mobile phone by applying the message processing method provided in embodiments of this application.

In this scenario, the mobile phone may obtain detailed device information of the watch through the Bluetooth connection between the mobile phone and the watch, for example, a model and software and hardware capabilities of the watch. Therefore, the mobile phone may determine, based on the device information of the watch, that the watch does not support a voice broadcast capability (for example, determine based on absence of a speaker in hardware modules of the watch), but supports processing of a text message. Further, the mobile phone may record information about a message type that is supported and/or a message type that is not supported by the watch. For example, the mobile phone records that the watch does not support a voice message but supports a text message (or may record only the message type that is supported or only the message type that is not supported).

In an implementation, the foregoing process may be performed by the distributed network device information management module 203, and the information about the message type supported and/or the message type not supported by the device may be recorded in the device information storage module 203-2. Because the mobile phone may serve as a central device of the distributed network, the distributed network device information management module 203, the device information storage module 203-2, and the like may preferably run in the mobile phone.

When a distance (for example, obtained through Bluetooth ranging) between the mobile phone and the watch exceeds a threshold, user scenario recognition is triggered. For example, it may be comprehensively determined, based on the following information, that a current scenario of the user is a user scenario in which "the mobile phone is not carried with the user and the watch is worn by the user": (a) The distance between the mobile phone and the watch exceeds the threshold; (b) it is determined, based on data collected by a sensor in the mobile phone, that the mobile phone is in an absolute rest state; and (c) it is determined, based on data collected by a sensor in the watch, that the watch is in a state of being worn by the user, and it is determined, based on heart rate data, that a wearer is the user.

In an implementation, the foregoing process may be performed by the user scenario recognition module 202, and more specifically, performed by the user scenario fusion determining module 202-2. The user scenario recognition module 202, the user scenario fusion determining module 202-2, and the like may preferably run in the mobile phone, and certainly, may alternatively run in a server. In this case, the mobile phone needs to send information for user scenario recognition to the server, and the server obtains a user scenario recognition result, and then sends the result to the mobile phone.

In this distributed network and in this scenario, when the mobile phone receives a voice message, the following actions may be triggered: The mobile phone receives the voice message, and the mobile phone confirms that the user authorizes to enable an intelligent message delivery function. In addition, the mobile phone recognizes that a type of the message received this time is a voice type (for example, recognition is performed based on information such as an encoding format of the message), which is a message type not supported by the watch, and the user scenario is currently a user scenario in which "the mobile phone is not carried with the user and the watch is worn by the user". Based on this, the mobile phone may obtain a message delivery policy for the voice message, and the policy includes that: (1) delivery to the watch, and (2) conversion into a text message for delivery.

In an implementation, in the foregoing process, the mobile phone may confirm, based on authorization information recorded in the user authorization module 201-1, that the user authorizes to enable the intelligent message delivery function. The mobile phone may identify, via the message delivery policy module 201 (or more specifically, the message type module 201-2 in the message delivery policy module 201), that the message type is the voice type. In a process of obtaining the message delivery policy, the mobile phone may determine a currently preferred message delivery policy through comprehensive decision based on information about devices in the current distributed network provided by the distributed network device information module 203 and information about the current user scenario provided by the user scenario recognition module 202.

Next, the mobile phone determines, according to the message delivery policy, that message conversion needs to be performed. Specifically, the voice message received this time needs to be converted into a text message. Further, the mobile phone converts the voice message into the text message based on a capability of a smart library. Optionally, the mobile phone may add a feature identifier to the converted message, to mark that the text message is obtained by converting a voice into a text. Then, the mobile phone pushes the converted message to the watch through the distributed network, namely, the Bluetooth connection between the mobile phone and the watch, and the watch prompts and displays the text message. In an implementation, the foregoing process may be executed by the message conversion module 204, and the message conversion module 204 may preferably run in the mobile phone that serves as the central device of the distributed network.

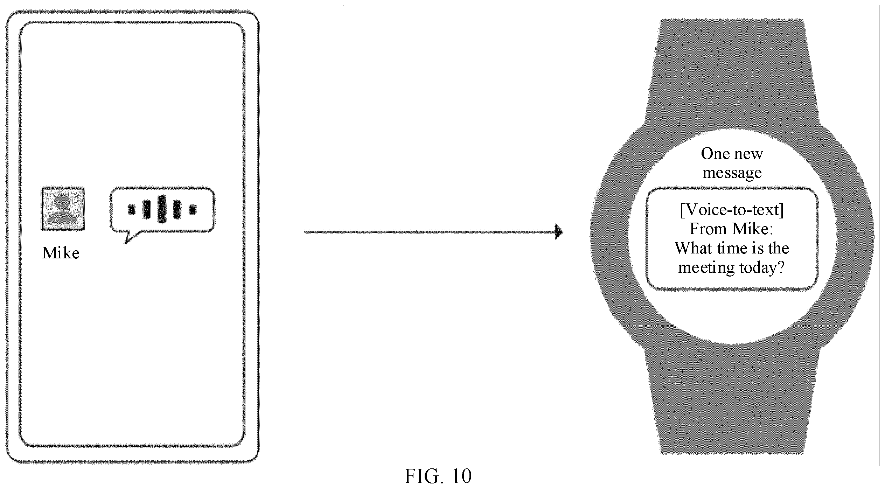

As shown in FIG. 10, the mobile phone receives a voice message from Mike. In response to receiving the new message, the mobile phone queries whether the user authorizes to enable the intelligent message delivery function. If it is confirmed that the user authorizes to enable the intelligent message delivery function, intelligent delivery is performed on the message, that is, the message processing method provided in embodiments of this application is applied. The mobile phone recognizes that the message type is a voice type, the current distributed network includes two devices: the mobile phone and the watch, the watch does not support a voice message but supports a text message, and the current user scenario is that the mobile phone is not carried and the watch is worn. Based on this, the mobile phone may formulate a message delivery policy in which the voice message needs to be converted into a text message and then the text message is delivered to the watch. Then, according to the formulated message delivery policy, the mobile phone converts the voice message into the text message based on the capability of the smart library, and then delivers the text message to the watch. Optionally, a feature identifier may be further added before the converted text message. Therefore, the watch may vibrate to prompt the user, and display content of the converted message on a screen of the watch, for example, "[voice-to-text] from Mike: What time is the meeting today?".

In the conventional technology, in this scenario, the watch only prompts the user that "A voice message is received. Please view the voice message on the mobile phone". Even if the user wears the watch, the user cannot efficiently and promptly obtain a message of a type that cannot be processed by the watch, and the user still needs to view the mobile phone. According to the technical solutions provided in embodiments of this application, the mobile phone may convert, based on information such as the current user scenario and online devices in the current distributed network, the voice message received by the mobile phone into the text message, and then deliver the text message to the watch. In this way, it is convenient for the user to obtain, in a timely manner via the watch worn by the user, text content obtained through message conversion, and the user does not need to reach the mobile phone to view detailed content of the message via the mobile phone. This greatly improves user experience.

### Scenario 2: Distributed network including a mobile phone, a watch, and a headset

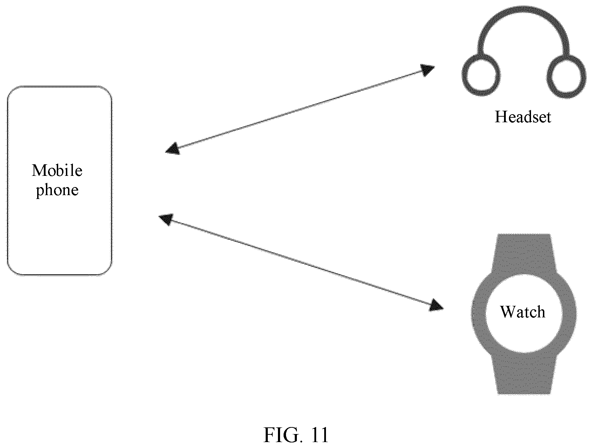

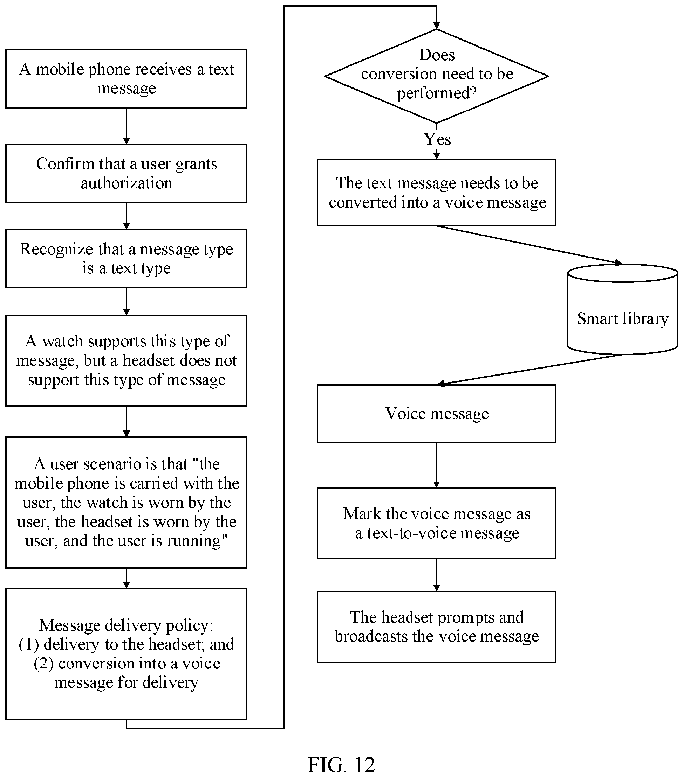

As shown in FIG. 11, the mobile phone and the watch may communicate with each other through a Bluetooth connection between the mobile phone and the watch. The mobile phone and the headset may communicate with each other through a Bluetooth connection between the mobile phone and the headset. The mobile phone, the watch, and the headset form the distributed network. FIG. 12 shows an example of steps performed, after the mobile phone receives a voice message in this scenario, by the mobile phone by applying the message processing method provided in embodiments of this application.

In this scenario, the mobile phone may obtain detailed device information of the watch and the headset through the Bluetooth connection between the mobile phone and the watch and the Bluetooth connection between the mobile phone and the headset, for example, models and software and hardware capabilities of the watch and the headset. Therefore, the mobile phone may determine, based on the device information of the watch and the headset, that the watch does not support a voice broadcast capability (for example, determine based on absence of a speaker in hardware modules of the watch), but supports processing of a text message; and determine that the headset supports a voice broadcast capability, but does not support processing of a text message. Further, the mobile phone may record information about a message type that is supported and/or a message type that is not supported by the watch and the headset. For example, the mobile phone records that the watch does not support a voice message but supports a text message, and records that the headset supports a voice message but does not support a text message (or may record only the message type that is supported or only the message type that is not supported).

In an implementation, the foregoing process may be performed by the distributed network device information management module 203, and the information about the message type supported and/or the message type not supported by the device may be recorded in the device information storage module 203-2. Because the mobile phone may serve as a central device of the distributed network, the distributed network device information management module 203, the device information storage module 203-2, and the like may preferably run in the mobile phone.

When a user status changes to running, user scenario recognition is triggered. For example, it may be comprehensively determined, based on the following information, that a current scenario of a user is "the mobile phone is carried with the user, the watch is worn by the user, the headset is worn by the user, and the user is running": (a) It is determined, based on data collected by a sensor in the mobile phone and data collected by a sensor in the watch, that the user is running; (b) the headset is in a working state; and (c) it is determined, based on the data collected by the sensor in the watch, that the watch is in a state of being worn by the user, and it is determined, based on heart rate data, that a wearer is the user.

In an implementation, the foregoing process may be performed by the user scenario recognition module 202, and more specifically, performed by the user scenario fusion determining module 202-2. The user scenario recognition module 202, the user scenario fusion determining module 202-2, and the like may preferably run in the mobile phone, and certainly, may alternatively run in a server. In this case, the mobile phone needs to send information for user scenario recognition to the server, and the server obtains a user scenario recognition result, and then sends the result to the mobile phone.

In this distributed network and in this scenario, when the mobile phone receives a text message, the following actions may be triggered: The mobile phone receives the text message, and the mobile phone confirms that the user authorizes to enable an intelligent message delivery function. In addition, the mobile phone recognizes that a type of the message received this time is a text type (for example, recognition is performed based on information such as an encoding format of the message), this message type is a message type supported by the watch but not supported by the headset, and the user scenario is currently a user scenario in which "the mobile phone is carried with the user, the watch is worn by the user, the headset is worn by the user, and the user is running". Based on this, the mobile phone may obtain a message delivery policy for the text message, and the policy includes that: (1) delivery to the headset, and (2) conversion into a voice message for delivery.

In an implementation, in the foregoing process, the mobile phone may confirm, based on authorization information recorded in the user authorization module 201-1, that the user authorizes to enable the intelligent message delivery function. The mobile phone may identify, via the message delivery policy module 201 (or more specifically, the message type module 201-2 in the message delivery policy module 201), that the message type is the text type. In a process of obtaining the message delivery policy, the mobile phone may determine a currently preferred message delivery policy through comprehensive decision based on information about devices in the current distributed network provided by the distributed network device information module 203 and information about the current user scenario provided by the user scenario recognition module 202.

Next, the mobile phone determines, according to the message delivery policy, that message conversion needs to be performed. Specifically, the text message received this time needs to be converted into a voice message. Further, the mobile phone converts the text message into the voice message based on a capability of a smart library. Optionally, the mobile phone may add a feature identifier to the converted message, to mark that the voice message is obtained by converting a text into a voice. Then, the mobile phone pushes the converted message to the headset through the distributed network, namely, the Bluetooth connection between the mobile phone and the headset, and the headset prompts and broadcasts the voice message by voice. In an implementation, the foregoing process may be executed by the message conversion module 204, and the message conversion module 204 may preferably run in the mobile phone that serves as the central device of the distributed network.

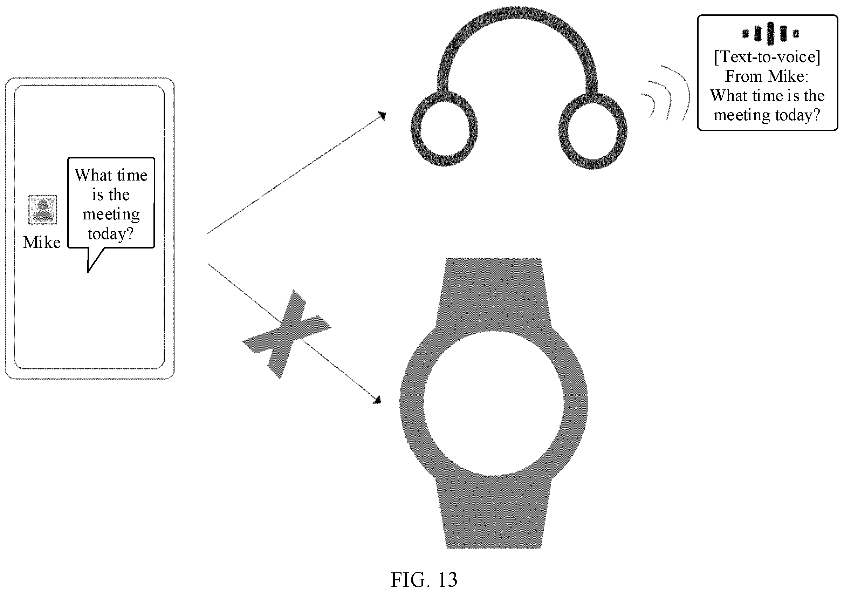

As shown in FIG. 13, the mobile phone receives a text message from Mike: "What time is the meeting today?". In response to receiving the new message, the mobile phone queries whether the user authorizes to enable the intelligent message delivery function. If it is confirmed that the user authorizes to enable the intelligent message delivery function, intelligent delivery is performed on the message, that is, the message processing method provided in embodiments of this application is applied.

The mobile phone recognizes that the message type is a text type, currently, the distributed network includes three devices: the mobile phone, the watch, and the headset, the watch does not support a voice message but supports a text message, the headset supports a voice message but does not support a text message, and the current user scenario is that the mobile phone is carried with the user, the watch is worn by the user, the headset is worn by the user, and the user is running. Based on this, the mobile phone may formulate a message delivery policy in which the text message needs to be converted into a voice message and then the voice message is delivered to the headset. It may be understood that, even if the user carries the mobile phone and wears the watch in this scenario, it is considered that the user is wearing the headset and running. In this case, it may be inconvenient for the user to view the mobile phone and the watch. Therefore, the message is delivered to the headset instead of the watch. Then, according to the formulated message delivery policy, the mobile phone converts the text message into the voice message based on the capability of the smart library, and delivers the voice message to the headset. Optionally, a feature identifier may be further added before the converted voice message. Therefore, the headset may vibrate to prompt the user, and broadcast converted message content by voice through a speaker, for example, broadcast by voice: "A message from Mike is received and automatically converted into the following voice: What time is the meeting today?".

In the conventional technology, in this scenario, both the watch and the headset receive the delivered message. The watch displays the message on a screen, and the headset may only broadcast by voice to prompt the user that "A text message is received. Please view the message on the mobile phone". The user that is running needs to raise a wrist to view the watch or view the mobile phone, and user experience is poor. According to the technical solutions provided in embodiments of this application, the mobile phone converts, based on information such as the current user scenario and online devices in the current distributed network, the text message received by the mobile phone into the voice message, and then delivers the voice message only to the headset, but does not deliver the voice message to the watch. The voice message is delivered only in a preferred manner. In this way, network overheads caused by message transmission in the distributed network are reduced, and a plurality of disturbances to the user due to multi-device transmission are reduced. The user may directly obtain, through voice broadcast of the headset, voice content obtained through message conversion, and the user does not need to view the watch or the mobile phone. This greatly improves user experience.

### Scenario 3: Distributed network including a mobile phone, a watch, and a vehicle-mounted terminal

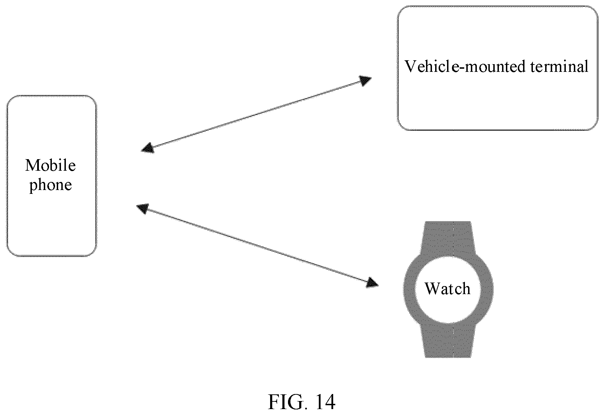

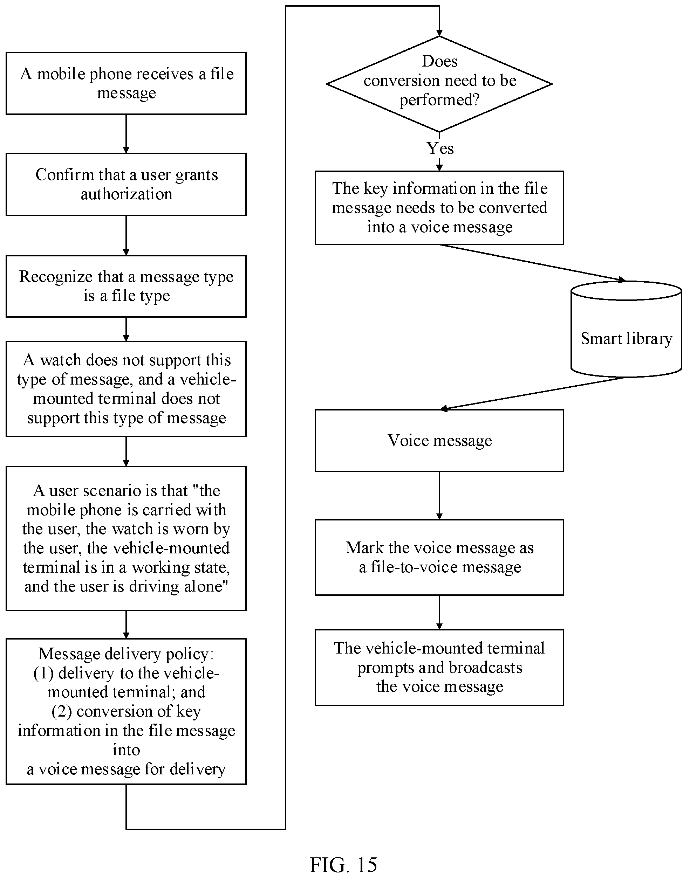

As shown in FIG. 14, the mobile phone and the watch may communicate with each other through a Bluetooth connection between the mobile phone and the watch. The mobile phone and the vehicle-mounted terminal may communicate with each other through a Bluetooth connection between the mobile phone and the vehicle-mounted terminal. The mobile phone, the watch, and the vehicle-mounted terminal form the distributed network. FIG. 15 shows an example of steps performed, after the mobile phone receives a file message in this scenario, by the mobile phone by applying the message processing method provided in embodiments of this application.

In this scenario, the mobile phone may obtain detailed device information of the watch and the vehicle-mounted terminal through the Bluetooth connection between the mobile phone and the watch and the Bluetooth connection between the mobile phone and the vehicle-mounted terminal, for example, models and software and hardware capabilities of the watch and the vehicle-mounted terminal. Therefore, the mobile phone may determine, based on the device information of the watch and the vehicle-mounted terminal, that the watch does not support a voice broadcast capability (for example, determine based on absence of a speaker in hardware modules of the watch), but supports processing of a text message; and determine that the vehicle-mounted terminal supports a voice broadcast capability, and supports processing of a text message. Further, the mobile phone may record information about a message type that is supported and/or a message type that is not supported by the watch and the vehicle-mounted terminal. For example, the mobile phone records that the watch does not support a voice message but supports a text message, and records that the vehicle-mounted terminal supports a voice message and supports a text message (or may record only the message type that is supported or only the message type that is not supported).

In an implementation, the foregoing process may be performed by the distributed network device information management module 203, and the information about the message type supported and/or the message type not supported by the device may be recorded in the device information storage module 203-2. Because the mobile phone may serve as a central device of the distributed network, the distributed network device information management module 203, the device information storage module 203-2, and the like may preferably run in the mobile phone.

When it is determined, based on data collected by a sensor mounted on a seat of a vehicle, that a person is in a vehicle, user scenario recognition is triggered. For example, it may be comprehensively determined, based on the following information, that a current scenario of a user is that "the mobile phone is carried with the user, the watch is worn by the user, the vehicle-mounted terminal is in a working state, and the user is driving alone": (a) The mobile phone and the vehicle-mounted terminal determine, through distance measurement (for example, through Bluetooth ranging), that the user is in the vehicle; (b) it is determined, based on data collected by a sensor in the vehicle and data collected by a sensor in the watch, that the user is driving; (c) it is determined, based on the data collected by the sensor in the watch, that the watch is in a state of being worn by the user, and it is determined, based on heart rate data, that a wearer is the user; and (d) it is determined, based on data collected by a sensor in the headset, that the headset is in a state of being worn by the user, that is, the headset is in the working state; and (e) it is determined, based on the data collected by the sensor mounted on the seat of the vehicle, that there is only a person in a driver seat in which the user is located, and that there is no person in another seat, and it is determined that the user is driving alone.

In an implementation, the foregoing process may be performed by the user scenario recognition module 202, and more specifically, performed by the user scenario fusion determining module 202-2. The user scenario recognition module 202, the user scenario fusion determining module 202-2, and the like may preferably run in the mobile phone, and certainly, may alternatively run in a server. In this case, the mobile phone needs to send information for user scenario recognition to the server, and the server obtains a user scenario recognition result, and then sends the result to the mobile phone.

In this distributed network and in this scenario, when the mobile phone receives a file message, the following actions may be triggered: The mobile phone receives the file message, and the mobile phone confirms that the user authorizes to enable an intelligent message delivery function. In addition, the mobile phone recognizes that a type of the message received this time is a file type (for example, recognition is performed based on information such as an encoding format of the message), which is a message type not supported by the watch and not supported by the vehicle-mounted terminal, and the user scenario is currently a user scenario in which "the mobile phone is carried with the user, the watch is worn by the user, the vehicle-mounted terminal is in a working state, and the user is driving alone". Based on this, the mobile phone may obtain a message delivery policy for the file message, and the policy includes that: (1) delivery to the vehicle-mounted terminal, and (2) conversion of key information in the file message into a voice message for delivery.

In an implementation, in the foregoing process, the mobile phone may confirm, based on authorization information recorded in the user authorization module 201-1, that the user authorizes to enable the intelligent message delivery function. The mobile phone may identify, via the message delivery policy module 201 (or more specifically, the message type module 201-2 in the message delivery policy module 201), that the message type is the file type. In a process of obtaining the message delivery policy, the mobile phone may determine a currently preferred message delivery policy through comprehensive decision based on information about devices in the current distributed network provided by the distributed network device information module 203 and information about the current user scenario provided by the user scenario recognition module 202.

Next, the mobile phone determines, according to the message delivery policy, that message conversion needs to be performed. Specifically, the key information in the file message received this time needs to be converted into a voice message. Further, the mobile phone converts the key information in the file message into the voice message based on a capability of a smart library. Optionally, the mobile phone may add a feature identifier to the converted message, to mark that the voice message is obtained by converting a file into a voice. Then, the mobile phone pushes the converted message to the vehicle-mounted terminal through distributed network, namely, the Bluetooth connection between the mobile phone and the vehicle-mounted terminal, and the vehicle-mounted terminal prompts (for example, a screen of the vehicle-mounted terminal displays a message prompt) and broadcasts the voice message by voice. In an implementation, the foregoing process may be executed by the message conversion module 204, and the message conversion module 204 may preferably run in the mobile phone that serves as the central device of the distributed network.

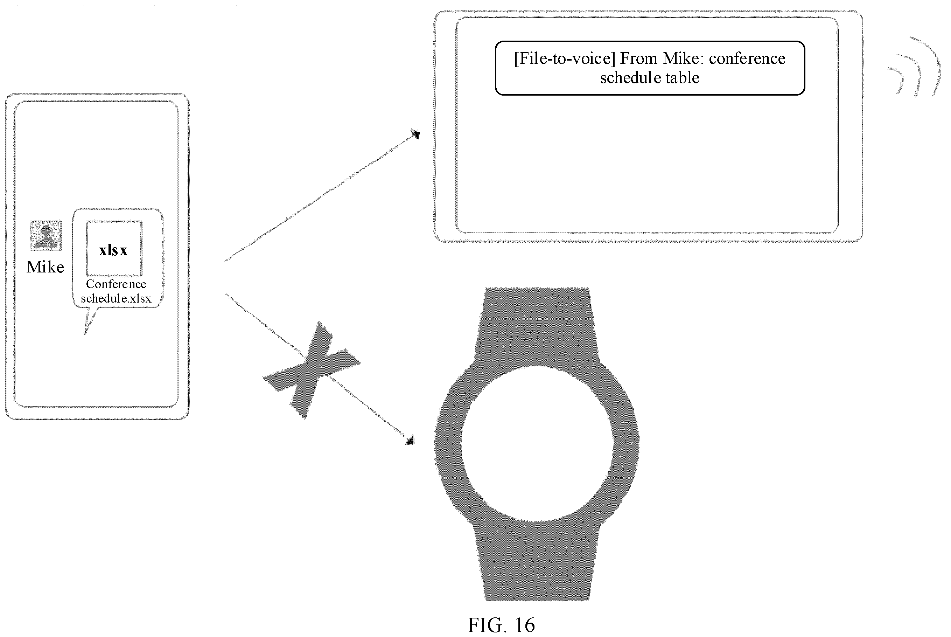

As shown in FIG. 16, the mobile phone receives a file message from Mike, namely, a file named "Conference schedule.xlsx". In response to receiving the new message, the mobile phone queries whether the user authorizes to enable the intelligent message delivery function. If it is confirmed that the user authorizes to enable the intelligent message delivery function, intelligent delivery is performed on the message, that is, the message processing method provided in embodiments of this application is applied.

The mobile phone recognizes that the message type is a file type, currently, the distributed network includes three devices: the mobile phone, the watch, and the vehicle-mounted terminal, the watch does not support a voice message but supports a text message, the vehicle-mounted terminal supports a voice message and supports a text message, and the current user scenario is that the mobile phone is carried with the user, the watch is worn by the user, the vehicle-mounted terminal is in a working state, and the user is driving alone. Based on this, the mobile phone may formulate a message delivery policy in which the key information (for example, name information of the file and format information of the file) in the file message needs to be converted into a voice message and then the voice message is delivered to the vehicle-mounted terminal. It may be understood that, even if the user carries the mobile phone and wears the watch in this scenario, it is considered that the user is driving. In this case, if the user views the mobile phone or the watch, a safety risk is caused to driving. In addition, it is considered that the user is driving alone, and there is no another passenger in the vehicle. In this case, processing the message via the vehicle-mounted terminal does not cause user privacy leakage. Therefore, the message is delivered to the vehicle-mounted terminal instead of the watch. Then, according to the formulated message delivery policy, the mobile phone converts the key information in the file message into the voice message based on the capability of the smart library, and delivers the voice message to the vehicle-mounted terminal. Optionally, a feature identifier may be further added before the converted voice message. Therefore, the vehicle-mounted terminal may display a message prompt to prompt the user, and broadcast by voice converted message content through the speaker, for example, broadcast by voice: "A table file is received from Mike, and a file name is conference schedule. Please pay attention". Optionally, the screen of the vehicle-mounted terminal may also display text content corresponding to the voice message: "[File-to-voice] from Mike: Conference schedule table".

In the conventional technology, in this scenario, both the watch and the vehicle-mounted terminal receive the delivered message. The user that is driving may raise a wrist to view the message when feeling vibration of the watch, and this causes a driving safety risk. According to the technical solutions provided in embodiments of this application, the mobile phone converts, based on information such as the current user scenario and online devices in the current distributed network, the key information in the text message received by the mobile phone into the voice message, and then delivers the voice message only to the vehicle-mounted, but not to the watch. The voice message is delivered only in a preferred manner. In this way, network overheads caused by message transmission in the distributed network are reduced, and a plurality of disturbances to the user due to multi-device transmission are reduced. In addition, for a message of a message type that is difficult to effectively convey content, like the file message, in this embodiment of this application, key information in the message may be extracted, converted, and delivered to a device that can currently process the message in a most efficient and secure manner by the user. In this way, the user can obtain key information in a newly received message in a timely manner and securely process the newly received message. The user may directly obtain, through voice broadcast of the vehicle-mounted terminal, voice content obtained through conversion of the key information in the message, and the user does not need to view the watch or the mobile phone. This greatly improves user experience.

### Scenario 4: Distributed network including a mobile phone, a watch, a vehicle-mounted terminal, and a headset

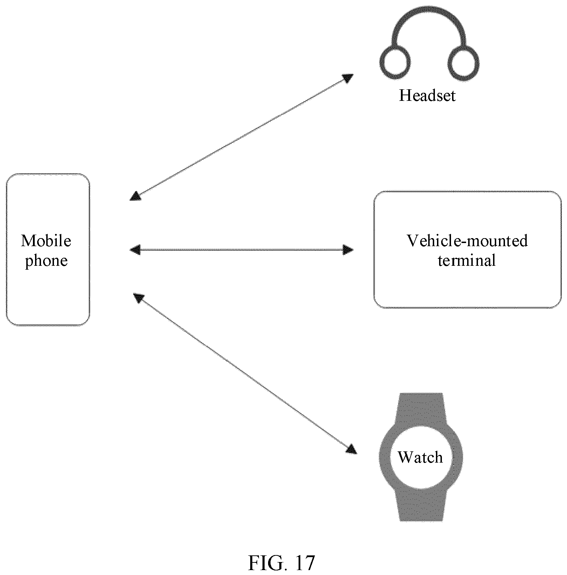

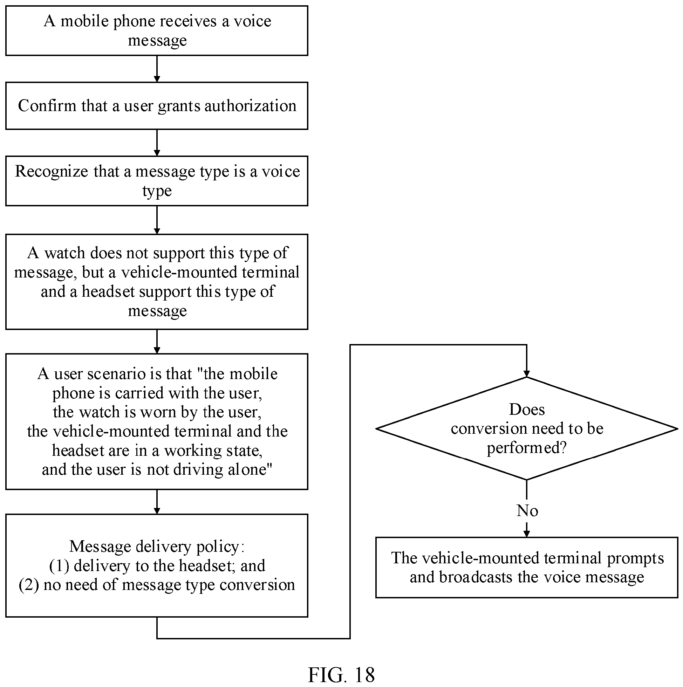

As shown in FIG. 17, the mobile phone and the watch may communicate with each other through a Bluetooth connection between the mobile phone and the watch. The mobile phone and the vehicle-mounted terminal may communicate with each other through a Bluetooth connection between the mobile phone and the vehicle-mounted terminal. The mobile phone and the headset may communicate with each other through a Bluetooth connection between the mobile phone and the headset. The mobile phone, the watch, the vehicle-mounted terminal, and the headset form the distributed network. FIG. 18 shows an example of steps performed, after the mobile phone receives a voice message in this scenario, by the mobile phone by applying the message processing method provided in embodiments of this application.

In this scenario, the mobile phone may obtain detailed device information of the watch, the vehicle-mounted terminal, and the headset through the Bluetooth connection between the mobile phone and the watch, the Bluetooth connection between the mobile phone and the vehicle-mounted terminal, and the Bluetooth connection between the mobile phone and the headset, for example, models and software and hardware capabilities of the watch, the vehicle-mounted terminal, and the headset. Therefore, the mobile phone may determine, based on the device information of the watch, the vehicle-mounted terminal, and the headset, that the watch does not support a voice broadcast capability (for example, determine based on absence of a speaker in hardware modules of the watch), but supports processing of a text message; determine that the vehicle-mounted terminal supports a voice broadcast capability, and supports processing of a text message; and determine that the headset supports a voice broadcast capability, but does not support a text message. Further, the mobile phone may record information about a message type that is supported and/or a message type that is not supported by the watch, the vehicle-mounted terminal, and the headset. For example, the mobile phone records that the watch does not support a voice message but supports a text message, records that the vehicle-mounted terminal supports a voice message and supports a text message, and records that headset supports a voice message but does not support a text message (or may record only the message type that is supported or only the message type that is not supported).

In an implementation, the foregoing process may be performed by the distributed network device information management module 203, and the information about the message type supported and/or the message type not supported by the device may be recorded in the device information storage module 203-2. Because the mobile phone may serve as a central device of the distributed network, the distributed network device information management module 203, the device information storage module 203-2, and the like may preferably run in the mobile phone.

When it is determined, based on data collected by a sensor mounted on a seat of a vehicle, that a person is in a vehicle, user scenario recognition is triggered. For example, it may be comprehensively determined, based on the following information, that a current scenario of the user is that "the mobile phone is carried with the user, the watch is worn by the user, the vehicle-mounted terminal and the headset are in a working state, and the user is not driving alone": (a) The mobile phone and the vehicle-mounted terminal determine, through distance measurement (for example, through Bluetooth ranging), that the user is in the vehicle; (b) it is determined, based on data collected by a sensor in the vehicle and data collected by a sensor in the watch, that the user is driving; (c) it is determined, based on the data collected by the sensor in the watch, that the watch is in a state of being worn by the user, and it is determined, based on heart rate data, that a wearer is the user; (d) it is determined, based on data collected by a sensor in the headset, that the headset is in a state of being worn by the user, that is, the headset is in the working state; and (e) it is determined, based on the data collected by the sensor mounted on the seat of the vehicle, that there is a person in a driver seat in which the user is located, there is a person in a front passenger seat, and there is no person in another seat, and it is determined that the user is not driving alone.

In an implementation, the foregoing process may be performed by the user scenario recognition module 202, and more specifically, performed by the user scenario fusion determining module 202-2. The user scenario recognition module 202, the user scenario fusion determining module 202-2, and the like may preferably run in the mobile phone, and certainly, may alternatively run in a server. In this case, the mobile phone needs to send information for user scenario recognition to the server, and the server obtains a user scenario recognition result, and then sends the result to the mobile phone.

In this distributed network and in this scenario, when the mobile phone receives a voice message, the following actions may be triggered: The mobile phone receives the voice message, and the mobile phone confirms that the user authorizes to enable an intelligent message delivery function. In addition, the mobile phone recognizes that a type of the message received this time is a voice type (for example, recognition is performed based on information such as an encoding format of the message), which is a message type not supported by the watch but supported by the vehicle-mounted terminal and the headset, and the user scenario is currently a user scenario in which "the mobile phone is carried with the user, the watch is worn by the user, the vehicle-mounted terminal and the headset are in a working state, and the user is not driving alone". Based on this, the mobile phone may obtain a message delivery policy for the voice message, and the policy includes that: (1) delivery to the headset, and (2) no need of message type conversion.

In an implementation, in the foregoing process, the mobile phone may confirm, based on authorization information recorded in the user authorization module 201-1, that the user authorizes to enable the intelligent message delivery function. The mobile phone may identify, via the message delivery policy module 201 (or more specifically, the message type module 201-2 in the message delivery policy module 201), that the message type is the file type. In a process of obtaining the message delivery policy, the mobile phone may determine a currently preferred message delivery policy through comprehensive decision based on information about devices in the current distributed network provided by the distributed network device information module 203 and information about the current user scenario provided by the user scenario recognition module 202.

Next, the mobile phone determines, according to the message delivery policy, that message conversion does not need to be performed, and directly delivers the voice message to the headset through the Bluetooth connection between the mobile phone and the headset, and the headset plays the voice message.

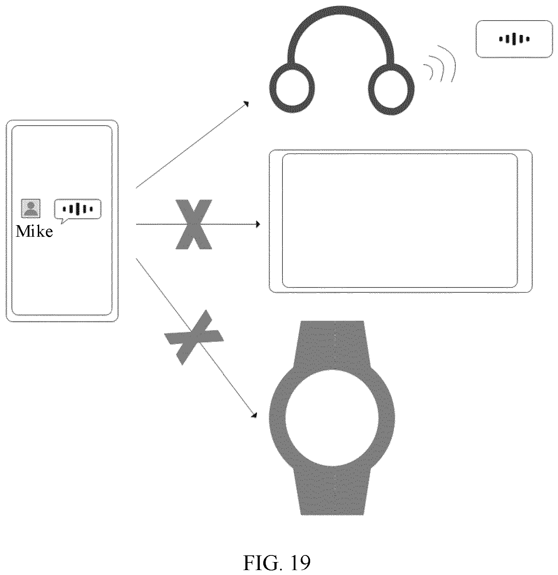

As shown in FIG. 19, the mobile phone receives a voice message from Mike. In response to receiving the new message, the mobile phone queries whether the user authorizes to enable the intelligent message delivery function. If it is confirmed that the user authorizes to enable the intelligent message delivery function, intelligent delivery is performed on the message, that is, the message processing method provided in embodiments of this application is applied.

The mobile phone recognizes that the message type is a voice type, currently, the distributed network includes four devices: the mobile phone, the watch, the vehicle-mounted terminal, and the headset, the watch does not support a voice message but supports a text message, the vehicle-mounted terminal supports a voice message and supports a text message, the headset supports a voice message but does not support a text message, and the current user scenario is that the mobile phone is carried with the user, the watch is worn by the user, the vehicle-mounted terminal and the headset are in a working state, and the user is not driving alone. Based on this, the mobile phone may formulate a message delivery policy in which the voice message is directly delivered to the headset without converting the message type.

It may be understood that, even if the user carries the mobile phone and wears the watch in this scenario, it is considered that the user is driving. If the user views the mobile phone or the watch, a safety risk is caused to driving. In addition, it is considered that the user is not driving alone, and there is another passenger in the vehicle. In this case, processing the message via the vehicle-mounted terminal causes user privacy leakage. Therefore, the message is delivered to the headset instead of the vehicle-mounted terminal or the watch. Therefore, after obtaining the delivered voice message, the headset directly plays the voice message, and the user can learn in time content of the voice message sent by Mike. Optionally, before delivering the message, the mobile phone may also add a message source identifier before the voice message, for example, add voice content "a voice message received from Mike is as follows", so that the user that listens to the message via the headset can accurately know a message source.

In the conventional technology, in this scenario, the watch, the vehicle-mounted terminal, and the headset all receive the delivered message. The user that is driving may raise a wrist to view the message when feeling vibration of the watch, and this causes a driving safety risk. The vehicle-mounted terminal displays a new message received by the user, and this causes user privacy leakage. Although the headset prompts the user that a new message is received, the headset does not directly play the voice, and the user still cannot know content of the message. According to the technical solutions provided in embodiments of this application, the mobile phone delivers, based on information such as the current user scenario and online devices in the current distributed network, the voice message received by the mobile phone only to the headset, and does not deliver the voice message to the watch or the vehicle-mounted terminal, and the headset directly plays the message delivered to the headset. The voice message is delivered only in a preferred manner. In this way, network overheads caused by message transmission in the distributed network are reduced, a plurality of disturbances to the user due to multi-device transmission are reduced, leakage of user privacy is avoided, timeliness of information acquisition is improved, and user experience is greatly improved.

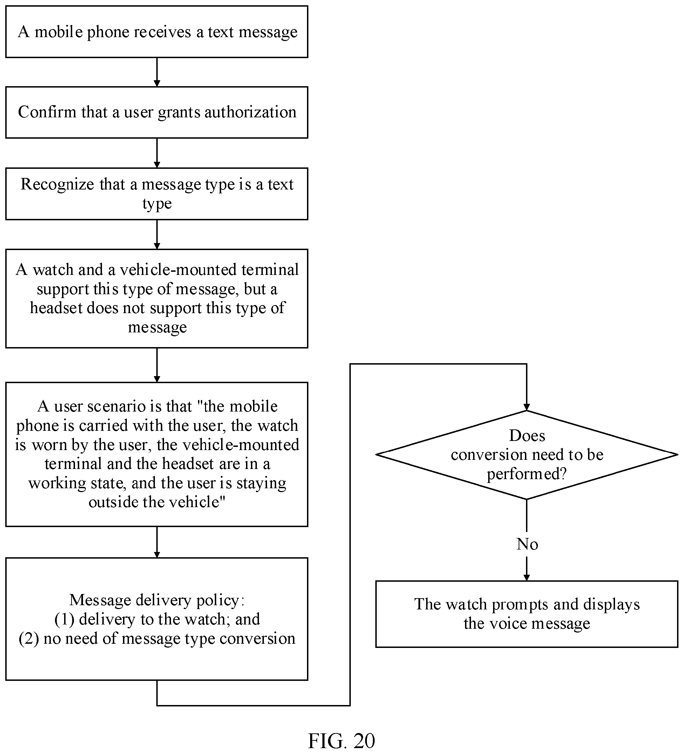

In the foregoing examples of the scenario 3 and the scenario 4, the user is in the vehicle. In another possible scenario, based on the distributed network shown in FIG. 17, the following user scenario may further exist: "the mobile phone is carried with the user, the watch is worn by the user, the vehicle-mounted terminal and the headset are in a working state, and the user is staying outside the vehicle". FIG. 20 shows an example of steps performed, after the mobile phone receives a voice message in this scenario, by the mobile phone by applying the message processing method provided in embodiments of this application.

When it is determined, based on a time distance between the vehicle-mounted terminal and the mobile phone carried by the user (for example, through Bluetooth ranging), that the user leaves the vehicle (optionally, it may alternatively be determined, based on data collected by a sensor in the driver seat, that the user leaves the vehicle), user scenario recognition is triggered. For example, it may be comprehensively determined, based on the following information, that a current scenario of the user is that "the mobile phone is carried with the user, the watch is worn by the user, the vehicle-mounted terminal and the headset are in a working state, and the user is staying outside the vehicle": (a) The mobile phone and the vehicle-mounted terminal determine, through distance measurement (for example, through Bluetooth ranging), that the user is outside the vehicle; (b) it is determined, based on data collected by a sensor in the vehicle and data collected by a sensor in the watch, that the user is not driving; (c) it is determined, based on the data collected by the sensor in the watch, that the watch is in a state of being worn by the user, and it is determined, based on heart rate data, that a wearer is the user; and (d) it is determined, based on data collected by a sensor in the headset, that the headset is in a state of being worn by the user, that is, the headset is in the working state.

In an implementation, the foregoing process may be performed by the user scenario recognition module 202, and more specifically, performed by the user scenario fusion determining module 202-2. The user scenario recognition module 202, the user scenario fusion determining module 202-2, and the like may preferably run in the mobile phone, and certainly, may alternatively run in a server. In this case, the mobile phone needs to send information for user scenario recognition to the server, and the server obtains a user scenario recognition result, and then sends the result to the mobile phone.

In this distributed network and in this scenario, when the mobile phone receives a text message, the following actions may be triggered: The mobile phone receives the text message, and the mobile phone confirms that the user authorizes to enable an intelligent message delivery function. In addition, the mobile phone recognizes that a type of the message received this time is a text type (for example, recognition is performed based on information such as an encoding format of the message), this message type is a message type supported by the watch, supported by the vehicle-mounted terminal, but not supported by the headset, and the user scenario is currently a user scenario in which "the mobile phone is carried with the user, the watch is worn by the user, the vehicle-mounted terminal and the headset are in a working state, and the user is staying outside the vehicle". Based on this, the mobile phone may obtain a message delivery policy for the voice message, and the policy includes that: (1) delivery to the mobile phone, and (2) no need of message type conversion.

In an implementation, in the foregoing process, the mobile phone may confirm, based on authorization information recorded in the user authorization module 201-1, that the user authorizes to enable the intelligent message delivery function. The mobile phone may identify, via the message delivery policy module 201 (or more specifically, the message type module 201-2 in the message delivery policy module 201), that the message type is the text type. In a process of obtaining the message delivery policy, the mobile phone may determine a currently preferred message delivery policy through comprehensive decision based on information about devices in the current distributed network provided by the distributed network device information module 203 and information about the current user scenario provided by the user scenario recognition module 202.

Next, the mobile phone determines, according to the message delivery policy, that message conversion does not need to be performed, and directly delivers the text message to the watch through the Bluetooth connection between the mobile phone and the watch, and the watch vibrates to prompt and displays the text message.

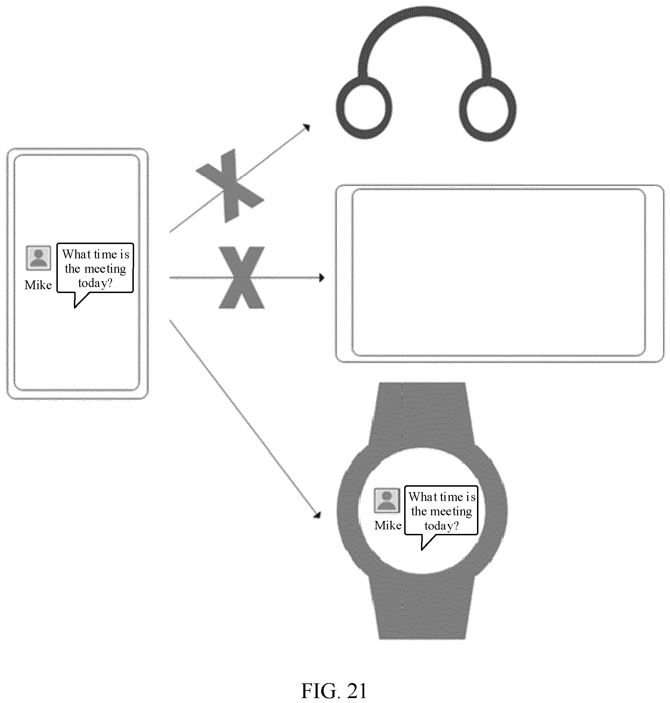

As shown in FIG. 21, the mobile phone receives a text message from Mike: "What time is the meeting today?". In response to receiving the new message, the mobile phone queries whether the user authorizes to enable the intelligent message delivery function. If it is confirmed that the user authorizes to enable the intelligent message delivery function, intelligent delivery is performed on the message, that is, the message processing method provided in embodiments of this application is applied.

The mobile phone recognizes that the message type is a text type, currently, the distributed network includes four devices: the mobile phone, the watch, the vehicle-mounted terminal, and the headset, the watch does not support a voice message but supports a text message, the vehicle-mounted terminal supports a voice message and supports a text message, the headset supports a voice message but does not support a text message, and the current user scenario is that the mobile phone is carried with the user, the watch is worn by the user, the vehicle-mounted terminal and the headset are in a working state, and the user is staying outside the vehicle. Based on this, the mobile phone may formulate a message delivery policy in which the voice message is directly delivered to the watch without converting the message type.

It may be understood that, even if the user carries the mobile phone and wears the headset in this scenario, it is considered that the user is staying outside the vehicle. In this case, the user cannot view the vehicle-mounted terminal in a timely manner, and environmental noise may affect a voice broadcast effect of the headset. In addition, it is considered that a message of a text type can be processed by the watch and type conversion does not need to be performed. In this case, a process may be simplified. Therefore, the message is delivered to the watch instead of the vehicle-mounted terminal or the headset. Therefore, after obtaining the delivered text message, the watch directly displays the text message, and the user can learn in time content of the text message sent by Mike.

In the conventional technology, in this scenario, the watch, the vehicle-mounted terminal, and the headset all receive the delivered message. It is impossible for the user that is currently staying outside the vehicle to view the vehicle-mounted terminal, and delivering the message to the vehicle-mounted terminal causes unnecessary communication overheads. Although the headset may prompt the user that a new message is received, the user still needs to view the watch or the mobile phone to obtain content of the message, and delivering the message to the headset also causes unnecessary communication overheads. According to the technical solutions provided in embodiments of this application, the mobile phone delivers, based on information such as the current user scenario and the online devices in the current distributed network, the text message received by the mobile phone only to the watch, and does not deliver the text message to the headset or the vehicle-mounted terminal. The text message is delivered only in a preferred manner. In this way, network overheads caused by message transmission in the distributed network are reduced, a plurality of disturbances to the user due to multi-device transmission are reduced, timeliness of information acquisition is improved, and user experience is greatly improved.

In conclusion, according to the technical solutions provided in embodiments of this application, a user status can be refreshed in real time based on a user behavior, and then differentiated delivery manners and delivery devices of messages of different message types can be determined based on the user status. In this way, messages can be sent to different devices of the user. During message delivery, an optimal device is selected based on a message type (for example, for a text message, the text message is only delivered to devices that can process the text message if a scenario permits), to reduce delay and information loss caused by message conversion. The following table summarizes technical problems resolved by main inventive concepts of the technical solutions in embodiments of this application and beneficial effects brought by the technical solutions.

| **Order** | **Technical problems to be resolved** | **Main innovative concepts of the present invention** | **Corresponding beneficial effects** |
|---|---|---|---|
| 1 | A message is pushed in a distributed network indiscriminately. The message is directly pushed to network devices in the distributed network indiscriminately. As a result, detailed information of the message cannot be viewed because some devices do not support a type of the message. | Based on message types supported by each device in the distributed network, a capability of a smart library is used to convert message content and push corresponding message types to different devices. | A user can view the detail information of the message. |
| 2 | A message is pushed in a distributed network indiscriminately. Pushing the message to devices in a distributed network regardless of user scenarios may pose privacy and safety risks. | A user scenario is recognized synthetically based on information such as multi-device data and user settings in the distributed network, and the message is accurately delivered based on the user scenario. | Privacy and safety risks are reduced without affecting users' query of the detailed message. |
| 3 | (1) A message causes a plurality of interactions in a distributed network, and channel resources of the distributed network are occupied. | A message is accurately delivered to a corresponding device based on devices in a distributed network and a user scenario, and another device does not receive the message. | Resource overheads of a distributed network channel are reduced, and a probability of message notification loss is further reduced. |
| | (2) A device in the distributed network is unstable. During the plurality of interactions, a probability of message notification loss increases. As a result, a message processing result may not be synchronized on different smart devices. | | |

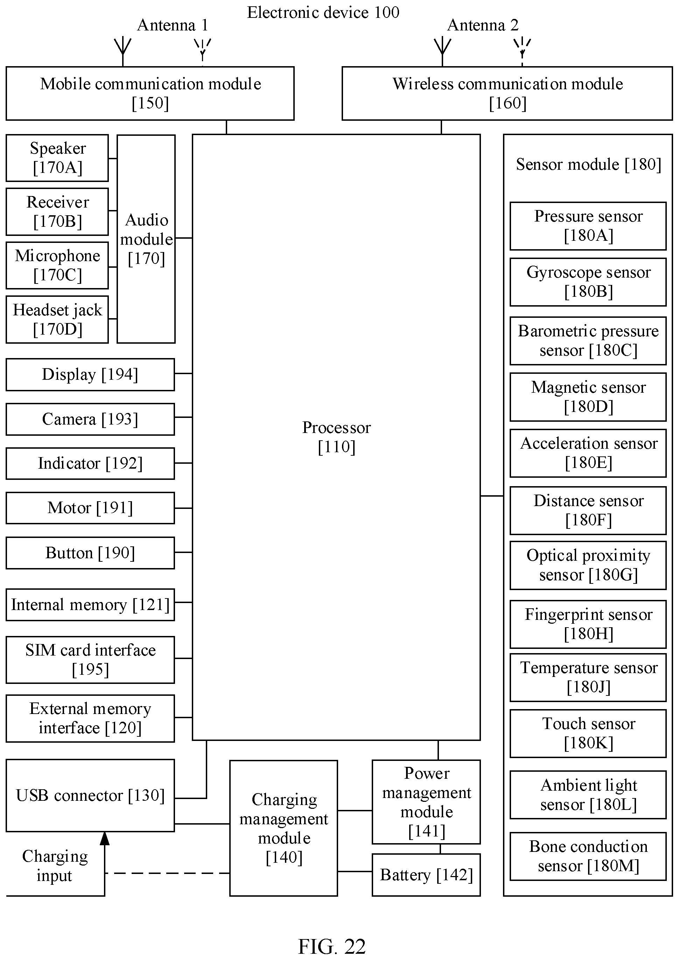

FIG. 22 is a diagram of an example of a structure of an electronic device 100 according to an embodiment of this application. The electronic device 100 may be any "device" (like a mobile phone, a watch, or a vehicle-mounted terminal) in embodiments of this application, or may be a server.

The electronic device 100 may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. The smart home device may include but is not limited to the following examples: a smart large screen, a smart television, a smart speaker, a sweeper, a smart light, and a smart toilet. A specific type of the electronic device 100 is not specifically limited in embodiments of this application.

The electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a micro-controller unit (micro-controller unit, MCU), a neural-network processing unit (neural-network processing unit, NPU), and/or the like. Different processing units may be independent components, or may be integrated into one or more processors.

The processor 110 may generate an operation control signal based on instruction operation code and a time sequence signal, to complete control instruction fetching and instruction execution.

A memory may be further disposed in the processor 110, and is configured to store instructions and data. In some embodiments, the memory in the processor 110 may be a cache. The memory may store instructions or data just used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module such as a touch sensor, an audio module, a wireless communication module, a display, and a camera through at least one of the foregoing interfaces.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The USB connector 130 is an interface complying with a USB standard specification, and may be configured to connect the electronic device 100 and a peripheral device, and may be specifically a Mini USB connector, a Micro USB connector, a USB Type-C connector, or the like. The USB connector 130 may be configured to connect to a charger, so that the charger charges the electronic device 100, or may be configured to connect to another electronic device, to implement data transmission between the electronic device 100 and the another electronic device. The USB connector 130 may alternatively be configured to connect to a headset, to output, through the headset, audio stored in the electronic device. The connector may be further configured to connect to another electronic device, for example, a VR device. In some embodiments, standard specifications of the universal serial bus may be USB1.x, USB2.0, USB3.x, and USB4.

The charging management module 140 is configured to receive a charging input of the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information. Certainly, the processor may not include a GPU, and a non-GPU processing unit is used to implement the foregoing functions.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 100 may include one or more displays 194.

The electronic device 100 may implement an image shooting function via the camera module 193, the ISP, the video codec, the GPU, the display 194, the application processor AP, the neural-network processing unit NPU, and the like.

The camera module 193 may be configured to collect color image data and depth data of a photographed object. The ISP may be configured to process the color image data collected by the camera module 193. For example, during photographing, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera module 193.

In some embodiments, the camera module 193 may include a color camera module and a 3D sensing module.

In some embodiments, a photosensitive element of a camera of the color camera module may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV.

In some embodiments, the 3D sensing module may be a (time of flight, TOF) 3D sensing module or a structured light (structured light) 3D sensing module. Structured light 3D sensing is an active depth sensing technology, and basic components of the structured light 3D sensing module may include an infrared (Infrared) transmitter, an IR camera module, and the like. A working principle of the structured light 3D sensing module is to first transmit a light spot of a specific pattern (pattern) to a photographed object, and then receive coding (light coding) of the light spot of the pattern on a surface of the object, to compare the light spot with an original projected light spot in terms of a similarity and a difference, and calculate three-dimensional coordinates of the object according to a trigonometric principle. The three-dimensional coordinates include a distance between the electronic device 100 and the photographed object. TOF 3D sensing may be an active depth sensing technology, and basic components of the TOF 3D sensing module may include an infrared (Infrared) transmitter, an IR camera module, and the like. A working principle of the TOF 3D sensing module is to calculate a distance (that is, a depth) between the TOF 3D sensing module and a photographed object by using an infrared refraction time, to obtain a 3D depth-of-field image.

The structured light 3D sensing module may be further applied to fields such as facial recognition, somatic game console, and industrial machine vision detection. The TOF 3D sensing module may be further applied to fields such as a game console and augmented reality (augmented reality, AR)/virtual reality (virtual reality, VR).

In some other embodiments, the camera module 193 may further include two or more cameras. The two or more cameras may include a color camera, and the color camera may be configured to collect color image data of a photographed object. The two or more cameras may collect depth data of a photographed object by using a stereo vision (stereo vision) technology. The stereo vision technology is based on a principle of a parallax of human eyes. Under a natural light source, two or more cameras are used to photograph an image of a same object from different angles, and then an operation such as a triangulation method is performed to obtain distance information, that is, depth information, between the electronic device 100 and the photographed object.

In some embodiments, the electronic device 100 may include one or more camera modules 193. Specifically, the electronic device 100 may include one front-facing camera module 193 and one rear-facing camera module 193. The front-facing camera module 193 may be usually configured to collect color image data and depth data of a photographer facing the display 194, and the rear-facing camera module may be configured to collect color image data and depth data of a photographed object (such as a character or a scenery) facing the photographer.

In some embodiments, the CPU, the GPU, or the NPU in the processor 110 may process color image data and depth data that are collected by the camera module 193. In some embodiments, the NPU may identify, by using a neural network algorithm based on a skeleton point identification technology, for example, a convolutional neural network (CNN) algorithm, color image data collected by the camera module 193 (specifically, the color camera module), to determine a skeleton point of the photographed character. The CPU or the GPU may also run a neural network algorithm to determine the skeleton point of the photographed character based on the color image data. In some embodiments, the CPU, the GPU, or the NPU may be further configured to: determine the figure (for example, a body proportion and a fatness and thinness degree of a body part between skeleton points) of the photographed character based on depth data collected by the camera module 193 (which may be the 3D sensing module) and the identified skeleton point, further determine a body beautification parameter for the photographed character, and finally process a photographed image of the photographed character based on the body beautification parameter, so that a body shape of the photographed character in the photographed image is beautified. In a subsequent embodiment, how to perform body shaping processing on an image of a photographed character based on color image data and depth data that are collected by the camera module 193 is described in detail. Details are not described herein.

The digital signal processor is configured to process a digital signal, and may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card. Alternatively, files such as music and a video are transmitted from the electronic device to the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods of the electronic device 100 and data processing.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may listen to music or output an audio signal of a hands-free call by using the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, angular velocities of the electronic device 100 around three axes (namely, axes x, y, and z) may be determined through the gyroscope sensor 180B. The gyroscope sensor 180B may be configured to implement image stabilization during photographing. For example, when a shutter is pressed, the gyroscope sensor 180B detects an angle at which the electronic device 100 jitters, obtains, through calculation based on the angle, a distance for which a lens module needs to compensate, and controls reverse motion of the lens to cancel the jitter of the electronic device 100, to implement image stabilization. The gyroscope sensor 180B may also be used in a navigation scenario or a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. When the electronic device is a foldable electronic device, the magnetic sensor 180D may be configured to detect folding or unfolding, or a folding angle of the electronic device. In some embodiments, when the electronic device 100 is a clamshell phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect accelerations in various directions (usually on three axes) of the electronic device 100. A magnitude and a direction of gravity may be detected when the electronic device 100 is still. The acceleration sensor 180E may be further configured to identify a posture of the electronic device, and is used in switching between a landscape mode and a portrait mode or an application like a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector like a photodiode. The light-emitting diode may be an infrared light-emitting diode. The electronic device 100 emits infrared light by using the light-emitting diode. The electronic device 100 detects infrared reflected light from a nearby object by using the photodiode. When intensity of detected reflected light is greater than a threshold, it may be determined that there is an object near the electronic device 100. When intensity of the detected reflected light is less than a threshold, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L may be configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is blocked. For example, the electronic device is in a pocket. When it is detected that the electronic device is blocked or is in a pocket, some functions (for example, a touch function) may be disabled, to prevent a misoperation.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature detected by the temperature sensor 180J exceeds a threshold, the electronic device 100 lowers performance of a processor, to reduce power consumption of the electronic device to implement thermal protection. In some other embodiments, when the temperature detected by the temperature sensor 180J is less than another threshold, the electronic device 100 heats the battery 142. In some other embodiments, when the temperature is less than still another threshold, the electronic device 100 may boost an output voltage of the battery 142.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may parse out a voice signal based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 may include a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or more SIM card interfaces. The SIM card interface 195 may support a nano-SIM card, a micro-SIM card, a SIM card, and the like. A plurality of cards may be inserted into a same SIM card interface 195 simultaneously. The plurality of cards can be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

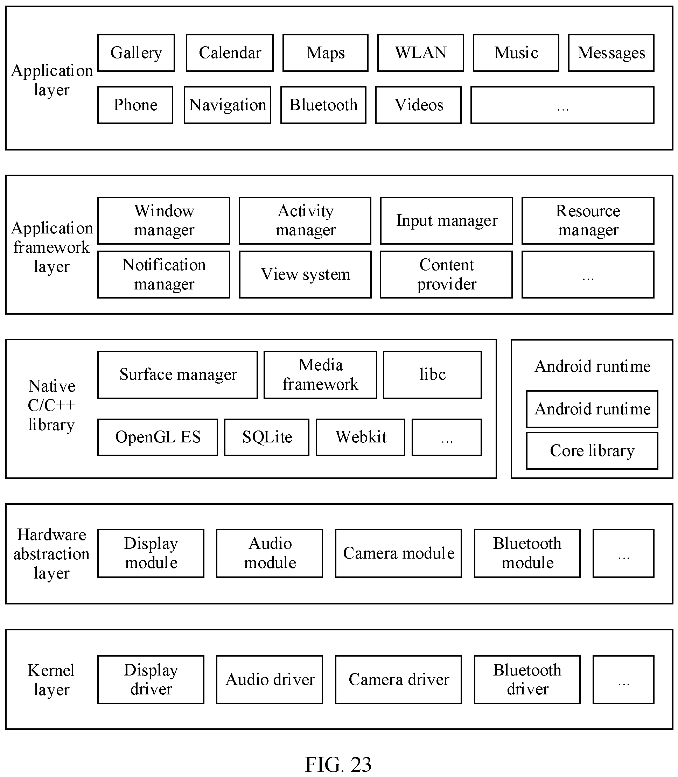

FIG. 23 is an example of a block diagram of a software structure of an electronic device 100 according to an embodiment of this application.

In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 23, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a resource manager, a notification manager, an activity manager, an input manager, and the like.

The window manager provides a window manager service (Window Manager Service, WMS), and the WMS can be used for window management, window animation management, surface management, and as a transit point for an input system.

The content provider is configured to store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert sound is played, the electronic device vibrates, or the indicator light blinks.

The activity manager may provide an activity manager service (Activity Manager Service, AMS). The AMS may be used to start, switch, and schedule system components (for example, activities, services, content providers, and broadcast receivers), and manage and schedule application processes.

The input manager can provide an input manager service (Input Manager Service, IMS), which can be used for system input management, for example, a touchscreen input, a key input, and a sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides the API for the user to develop the Android application.

A native C/C++ library may include a plurality of function modules, such as a surface manager (surface manager), a media framework (Media Framework), libc, OpenGL ES, SQLite, and Webkit.

The surface manager is configured to manage a display subsystem and provide fusion of 2D and 3D layers for a plurality of applications. The media framework supports playing and recording of audio and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 100.

The hardware abstraction layer runs in user space (user space), encapsulates a kernel layer driver, and provides an interface for an upper layer to invoke.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

The foregoing embodiments are merely intended to describe the technical solutions of this application, but are not to limit this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A message processing method, applied to a first electronic device, wherein the first electronic device is located in a distributed network, the distributed network further comprises at least one electronic device other than the first electronic device, and the method comprises:
obtaining a first message;
determining a message delivery policy for the first message based on information about a message type of the first message, information about an electronic device comprised in the distributed network, and information about a current scenario, wherein the message delivery policy comprises information about a target electronic device; and
sending the first message or a converted first message to the target electronic device.

2. The method according to claim 1, wherein the information about the electronic device comprised in the distributed network comprises identification information of a currently online electronic device in the distributed network, and information about a message type supported by the currently online electronic device in the distributed network.

3. The method according to claim 1 or 2, wherein the information about the current scenario is determined based on multi-device data from the electronic device in the distributed network, and the multi-device data comprises one or more of distributed network device data, relationship data between electronic devices, user setting data, user status data, and device sensor data.

4. The method according to any one of claims 1 to 3, wherein the message delivery policy further comprises a message type conversion policy.

5. The method according to claim 4, wherein the method further comprises:
converting the first message of a first type into a first message of a second type according to the message type conversion policy; and
the sending a converted first message to the target electronic device specifically comprises:
sending the first message of the second type to the target electronic device, wherein the target electronic device supports the first message of the second type, but does not support the first message of the first type.

6. The method according to claim 5, wherein the method further comprises:
sending a feature identifier corresponding to the first message to the target electronic device, wherein the feature identifier indicates that the first message received by the target electronic device is a message on which type conversion is performed.

7. The method according to any one of claims 1 to 6, wherein the sending the first message or a converted first message to the target electronic device specifically comprises:
sending the first message or the converted first message to the target electronic device, and skipping sending the first message or the converted first message to an electronic device other than the target electronic device in the distributed network.

8. An electronic device, wherein the electronic device comprises a processor and a memory, the memory stores instructions, and when the instructions are run on the processor, the electronic device is enabled to perform the method according to any one of claims 1 to 7.

9. A computer program product, wherein the computer program product comprises instructions, and when the instructions are executed, an electronic device on which the computer program product is installed is enabled to perform the method according to any one of claims 1 to 7.

10. A computer-readable storage medium, wherein the computer-readable storage medium comprises instructions, and when the instructions are executed, an electronic device on which the computer-readable storage medium is installed is enabled to perform the method according to any one of claims 1 to 7.
